# EUROPÄISCHE PATENTSCHRIFT

(11) **EP 2 552 042 B1**
(45) Veröffentlichungstag und Bekanntmachung des Hinweises auf die Patenterteilung: **13.03.2013**
(21) Anmeldenummer: 11175784.5
(22) Anmeldetag: 28.07.2011
(51) Int. Cl.: H04L 1/00

(54) **Demultiplexen eines paketbasierten Transportstroms**
Demultiplexing of a packet-based transport stream
Démultiplexage d'un flux de transport à base de paquets

(43) Veröffentlichungstag der Anmeldung: 30.01.2013
(73) Patentinhaber: Fraunhofer-Gesellschaft zur Förderung der angewandten Forschung e.V., 80686 München (DE)
(72) Erfinder: Mull, Andreas, 90482 Nürnberg Nürnberg (DE); Forster, Christian, 90403 Nürnberg (DE); Hildinger, Rainer, 96049 Bamberg (DE); Dr. Gerhäuser, Heinz. Dr., 91344 Waischenfeld (DE)
(74) Vertreter: Schenk, Markus

(56) Entgegenhaltungen:
- EP-A1- 2 086 234
- EP-A2- 1 335 604
- EP-A2- 2 194 668

## Beschreibung

Die vorliegende Erfindung bezieht sich auf das Demultiplexen eines paketbasierten Transportstroms aus jeweils mit einem systematischen Vorwärtsfehlererkennungscode versehenen Transportstrompaketen, wobei die Transportstrompakete jeweils einer aus einer Mehrzahl von Datensenken zugeordnet sind.

Das Einkapseln von Datenströmen in einen anderen ist ein bekanntes Vorgehen und bildet die Basis für beispielsweise das OSI-Schichtenmodell. Ein paketbasierter Transportstrom aus Transportstrompaketen transportiert beispielsweise einen oder mehrere Datenströme, die ihrerseits wiederum Datenpakete aufweisen, indem die Datenpakete in die Nutzdatenabschnitte der Transportstrompakete eingebettet sind. Bei DVB-H sind beispielsweise MPE-Sektionen und MPE-FEC-Sektionen in die Nutzdatenabschnitte von Transportstrompaketen eingebettet, und IP-Pakete wiederum ihrerseits in die Nutzdatenabschnitte der MPE-Sektionen.

Pro Transportstrom kann natürlich nicht nur ein Datenstrom übertragen werden. Per Multiplex können mehrere Datenströme über einen gemeinsamen Transportstrom übertragen werden. Die unterschiedlichen Empfänger bzw. Datensenken sind beispielsweise unterschiedlichen Programmen, wie z.B. TV-Programmen oder Radioprogrammen, zugeordnet. Beim Multiplexen der Datenpakete der unterschiedlichen Empfänger bzw. Datensenken sind letztere in die Transportstrompakete so eingebettet, dass in ein Transportstrompaket jeweils nur ein Ausschnitt eines der Datenströme enthalten ist, jedes Transportstrompaket also genau einer Datensenke zugeordnet ist. Die Zuordnung der Transportstrompakete zu den Datensenken wird im Inneren der Transportstrompakete angezeigt, in einem sogenannten Transportstromheader.

Zeigt allerdings ein FEC-Schutz eines aktuellen Transportstrompaketes an, dass selbiges fehlerbehaftet ist, so kann sich ein Demultiplexer auf Empfangsseite nicht darauf verlassen, dass der angezeigte Empfänger bzw. die adressierte Datensenke auch dem tatsächlichen Empfänger bzw. der tatsächlich adressierten Datensenke entspricht. Demnach wird das Transportstrompaket verworfen und keiner der Datensenken zugeführt, um die Weiterleitung falscher Daten an die Datensenken zu vermeiden.

Der tatsächlich adressierten Datensenke fehlt damit aber ein Ausschnitt des an sie adressierten Datenstroms, was zu hohen Datenverlusten führen kann. Sind die Datenpakete in die Nutzdatenabschnitte der Transportstrompakete beispielsweise per Fragmentierung eingebettet, so ist bei Verlust eines an die jeweilige Datensenke adressierten Transportstrompaketes nicht nur der Ausschnitt aus dem an dieselbe adressierten Datenstrom verloren gegangen, sondern eventuell jedwedes Datenpaket, von dem ein Teil in das verloren gegangene Transportstrompaket entfiel. In dem Fall eines Interleaver-basierten FEC-Schutzes des Datenstromes kann das Fehlen eines Ausschnitts aus dem Datenstrom zudem zu einem fehlerhaften Ausfüllen der Interleaver-Tabelle führen, so dass der gesamte Ausschnitt des Datenstroms in der Interleaver-Tabelle an der betroffenen Datensenke verworfen werden muss.

Um in der Lage zu sein, Audioqualität mit Videoqualität zu kombinieren, beschreibt die EP 2086234 A1 einen digitalen Datenempfänger, der eine unterschiedliche Verarbeitung durchführt, je nach der Art von Postpaketen unter TS-Paketen, in denen Fehler auftreten. Zu diesem Zweck umfasst der digitale Datenempfänger: einen PID-Filterabschnitt zum Identifizieren von Videopaketen und Audiopaketen, einen Transportfehlerindikatorerfassungsabschnitt zum Bestimmen, ob ein Videopaket aufgrund seiner Anfangsblockinformationen ein Fehlerpaket ist, einen Videopaketbeseitigungsabschnitt zum Beseitigen eines Videopakets, das als Fehlerpaket bestimmt wurde, nur dann, wenn das Videopaket vorbestimmte Bedingungen bestätigt, einen Transportfehlerindikatorerfassungsabschnitt zum Bestimmen, ob ein Audiopaket aufgrund seiner Anfangsblockinformationen ein Fehlerpaket ist, und einen Audiopaketbeseitigungsabschnitt zum Beseitigen eines Audiopakets, das als Fehlerpaket bestimmt wurde. Die vorbestimmte Bedingung ist beispielsweise derart definiert, dass ein Videopaket nur dann als Fehlerpaket bestimmt wird, wenn eines oder eine Mehrzahl von Videopaketen, das bzw. die dem als Fehlerpaket bestimmten Paket vorausgeht bzw. vorausgehen, nicht empfangen wurde(n) oder wenn diese ebenfalls Fehlerpakete sind. Alternativ dazu beseitigt der Videopaketbeseitigungsabschnitt ein als Fehlerpaket bestimmtes Videopaket dann, wenn das Videopaket das führende Paket einer codierenden Verarbeitungseinheit ist. Dieses Dokument beschreibt also eine Vorrichtung zum Demultiplexen eines paketbasierten Transportstroms aus Transportstrompaketen, wobei die Transportstrompakete jeweils einer Datensenke zugeordnet sind, so dass in einen Nutzdatenabschnitt der Transportstrompakete, die einer gleichen Datensenke zugeordnet sind, ein Datenstrom aus Datenpaketen eingebettet ist, der an die jeweilige Datensenke adressiert ist, wobei die Vorrichtung ausgebildet ist, um für ein vorbestimmtes Transportstrompaket, das fehlerhaft ist, für die ausgewählte Datensenke einen Wahrscheinlichkeitswert zu bestimmen, der angibt, wie wahrscheinlich das vorbestimmte Transportstrompaket der ausgewählten Datensenke dennoch zuzustellen ist, und das vorbestimmte Transportstrompaket auf Basis des Wahrscheinlichkeitswerts der ausgewählten Datensenke zuzustellen.

Die Aufgabe der vorliegenden Erfindung besteht darin, ein Konzept zum Demultiplexen eines paketbasierten Datenstroms zu schaffen, das zu einer effektiveren Datenübertragung an die verschiedenen Datensenken führt.

Diese Aufgabe wird durch den Gegenstand der anhängigen unabhängigen Patentansprüche gelöst.

Der vorliegenden Erfindung liegt die Erkenntnis zugrunde, dass ein effektiveres Demultiplexen eines paketbasierten Transportstroms erhalten werden kann, wenn für ein vorbestimmtes Transportstrompaket, das gemäß seinem systematischen Vorwärtsfehlererkennungscode fehlerhaft ist, für jede der Mehrzahl von Datensenken ein Wahrscheinlichkeitswert bestimmt wird, der angibt, wie wahrscheinlich das vorbestimmte Transportstrompaket der jeweiligen Datensenke zugeordnet ist, um dann das vorbestimmte Transportstrompaket auf Basis der Wahrscheinlichkeitswerte für die Mehrzahl von Datensenken einer ausgewählten der Mehrzahl von Datensenken zuzuweisen, wie z.B. derjenigen, für die der maximale Wahrscheinlichkeitswert ermittelt worden ist.

Gemäß Ausführungsbeispielen der vorliegenden Erfindung werden unterschiedlichste Eigenschaften der Nutzdatenabschnitte der an eine jeweilige Datensenke adressierten Transportstrompakete verwendet, um den jeweiligen Wahrscheinlichkeitswert für die jeweilige Datensenke zu bestimmen. Beispielsweise können Redundanzen in den Datenpaketen des an die jeweilige Datensenke adressierten Datenstroms ausgewertet werden, wie z.B. die Vorwärtsfehlererkennungsdaten zum Schutz von Datenpaket-Headem der Datenpakete des jeweiligen Datenstroms oder redundante, Layer-übergreifende Adressangaben usw. Verschiedene Felder in den Datenpaketen bleiben zudem für die jeweilige Datensenke über einen längeren Zeitraum hinweg gleich, und diesen Umstand kann jede Datensenke ebenso verwenden. Solche gleichbleibenden Felder umfassen beispielsweise Adressfelder oder dergleichen. Zudem mögen Synchronisationsfelder in den Datenpaketen vorhanden sein, die immer den gleichen Wert aufweisen, und somit auch zur Bildung bzw. Bestimmung des jeweiligen Wahrscheinlichkeitswerts herangezogen werden können, beispielsweise weil die Auftrittswahrscheinlichkeit für die unterschiedlichen Datensenken über das Transportstrompaket hinweg unterschiedlich variiert.. All diese Hinweise können einen Beitrag zu dem schließlichen Wahrscheinlichkeitswert für die jeweilige Datensenke liefern. Beispielsweise werden die einzelnen Beiträge aufsummiert.

Weitere vorteilhafte Ausgestaltungen von Ausführungsbeispielen der vorliegenden Erfindung sind Gegenstand der abhängigen Patentansprüche. Bevorzugte Ausführungsbeispiele der vorliegenden Erfindung werden nachfolgend und Bezug nehmend auf die Zeichnungen näher erläutert. Es zeigen:
- Fig. 1: ein Blockschaltbild einer Vorrichtung zum Demultiplexen eines paketbasierten Transportstroms gemäß einem Ausführungsbeispiel;
- Fig.2: eine schematische Darstellung eins exemplarischen Aufbaus eines paketbasierten Transportstroms nebst eines in an eine vorbestimmte Datensenke adressierten Datenstroms gemäß einem Ausführungsbeispiel; und
- Fig. 3: eine schematische Darstellung eines internen Zustands eines Wahrscheinlichkeitswertbestimmers bei der - und zur Veranschaulichung der - Bestimmung eines Annahmewahrscheinlichkeitswerts für die zugeordnete Datensenke gemäß einem Ausführungsbeispiel.

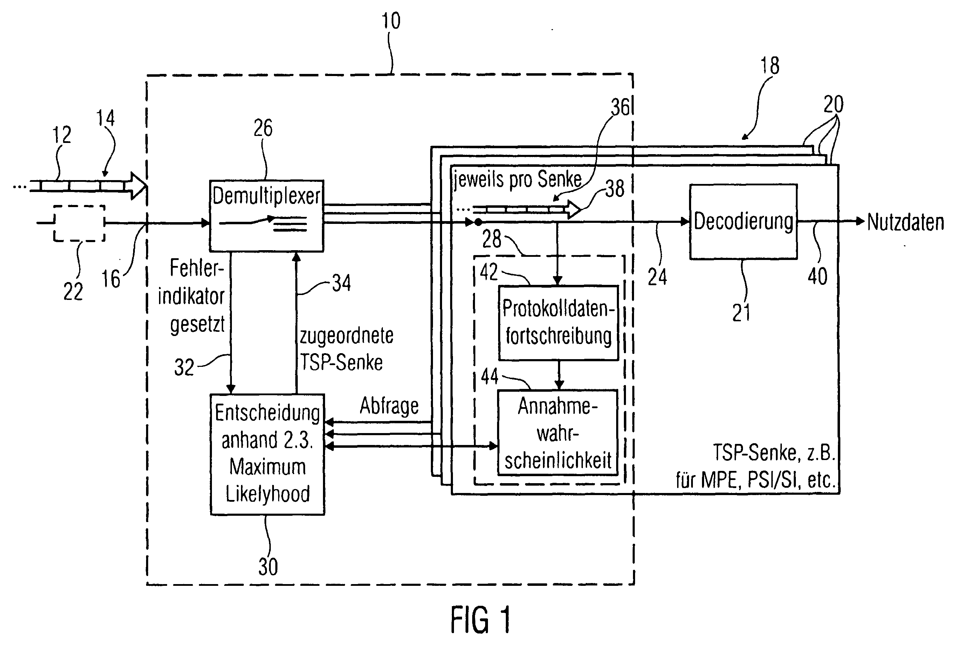

Fig. 1 zeigt eine Vorrichtung zum Demultiplexen eines paketbasierten Transportstroms gemäß einem Ausführungsbeispiel der vorliegenden Erfindung. In Fig. 1 ist die Vorrichtung allgemein mit 10 angezeigt. Die Vorrichtung 10 ist also dazu da, Transportstrompakete 12 eines Transportstroms 14 an einem Eingang 16 der Vorrichtung 10 einer Mehrzahl 18 von Datensenken 20 zuzuordnen, welche jeweils einen Decodierer 21 aufweisen, der den ihm jeweils zugeordneten Datenstrom decodiert.

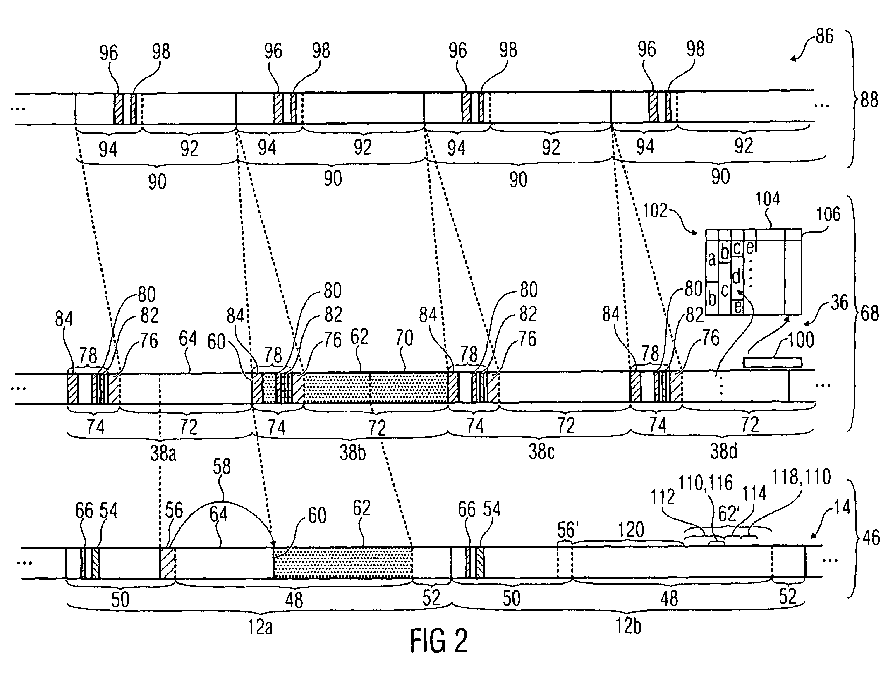

Die ankommenden Transportstrompakete 12 sind, wie es später Bezug nehmend auf Fig. 2 anhand eines konkreteren Beispiels noch genauer beschrieben wird, jeweils mit einem systematischen Vorwärtsfehlererkennungscode versehen und ermöglichen somit die Feststellung, ob das jeweilige Transportstrompaket 12 fehlerhaft ist oder nicht. Letztere Feststellung wird beispielsweise von einem optional dem Eingang 16 vorgeschalteten Transportstromfehlererkenner 22 durchgeführt, so dass gegebenenfalls bereits schon bei Eintreffen der Transportstrompakete 12 am Eingang 16 der Vorrichtung 10 signalisiert wird, ob das jeweilige Transportstrompaket 12 fehlerhaft ist oder nicht. Alternativ wird diese Feststellung in der Vorrichtung 10 selbst durchgeführt.

Die Vorrichtung 10 weist neben dem Eingang 16 für den Transportstrom 14 also einen Ausgang 24 pro Datensenke 20 auf und umfasst intern einen Demultiplexer oder Verteiler 26, pro Datensenke einen Wahrscheinlichkeitswertbestimmer 28 und einen Zuweiser 30. Der Verteile 26 ist zwischen den Eingang 16 und die Ausgänge 24 geschaltet. Der Verteiler 26 ist dazu da, die Transportstrompakete 12 in dem Transportstrom 14 der jeweils zugewiesenen Datensenke zuzuführen. In dem Fall nicht-fehlerhafter Transportstrompakete 12 kann der Verteiler 26 die Zuweisung der einzelnen Transportstrompakete 12 zu den einzelnen Datensenken 20 beispielsweise den Transportstrompaketen 12 selbst entnehmen, wie z.B. einem vorbestimmten Feld in einem Transportstrompaketheader, wie es Bezug nehmend auf Fig. 2 noch anhand eines konkreteren Beispiels beschrieben wird. Der Verteiler 26 erhält also der Reihe nach die Transportstrompakete 12 aus dem Transportstrom 14 und leitet das aktuelle Transportstrompaket, falls es fehlerfrei ist, an die zugeordnete Datensenke 20 weiter. Die anderen Datensenken 20 erhalten dieses Datenpaket nicht.

Insofern umfasst der Verteiler 26 einen Eingang der mit dem Eingang 16 verbunden ist, und jeweils einen Ausgang für jeden der Ausgänge 24 für die Datensenken 20. Für jede Datensenke 20 ist nun auch ein Eingang des Wahrscheinlichkeitswertbestimmers 28 für die jeweilige Datensenke 20 mit dem jeweiligen Ausgang des Verteilers 26 verbunden, um an dem Eingang ebenfalls die der jeweiligen Datensenke 20 durch den Verteiler 26 zugeführten Transportstrompakete 12 zu erhalten. Es sei kurz darauf hingewiesen, dass gemäß einem alternativen Ausführungsbeispiel diese Verbindung zwischen Verteiler 26 und den Wahrscheinlichkeitswertbestimmern 28 fehlen könnte, wenn bestimmte Ausführungsoptionen, die im Folgenden noch näher beschrieben werden, nicht angewendet werden. Hierauf wird am Ende der Beschreibung noch mal eingegangen.

Der Verteiler 26 ist nun ausgebildet, immer dann, wenn das aktuelle Transportstrompaket 12 fehlerhaft ist, dies dem Zuweiser 30 anzuzeigen, wie dies durch einen Pfeil 32 angedeutet ist. Dazu ist der Verteiler 26 mit dem Zuweiser 30 gekoppelt. Als Antwort auf die Anzeige 32 zeigt der Zuweiser 30 dem Verteiler 26 an, welcher Datensenke 20 das aktuelle Transportstrompaket 12 trotz seiner Fehlerhaftigkeit zugewiesen und weitergeleitet werden soll, wobei dies durch den Pfeil 34 angedeutet ist. Die Mitteilung 34 kann gemäß einem Ausführungsbeispiel als eine Antwortoption auch beinhalten, dass das aktuelle Transportstrompaket 12 trotz aller nachfolgend noch näher erläuterten Maßnahmen tatsächlich zu verwerfen ist.

Wie es nun noch Bezug nehmend auf Fig. 2 näher erläutert werden wird, ist in Nutzdatenabschnitte von Transportstrompaketen 12, die einer gleichen Datensenke 20 zugeordnet sind, ein Datenstrom 36 aus Datenpaketen 38 eingebettet. Genau genommen kann es also sein, dass der Verteiler 26 ausgebildet ist, um nur den Nutzdatenabschnitt eines aktuellen Transportstrompakets 12 an die jeweils zugewiesene Datensenke 20 bzw. den jeweiligen Wahrscheinlichkeitswertbestimmer 28 weiterzugeben. In dem idealen Fall, dass der Verteiler 26 jedes Transportstrompaket 12 bzw. dessen Nutzdatenabschnitt an den korrekten Empfänger bzw. die korrekt adressierte Datensenke 20 und den entsprechenden Wahrscheinlichkeitswertbestimmer weiterleitet, ergibt sich am Eingang der letztgenannten Module 20 bzw. 28 für die jeweilige Datensenke 20 der an die jeweilige Datensenke 20 adressierte Datenstrom 36 vollständig. In diesem Fall wäre jede Datensenke 20 bzw. der jeweils zugehörige Decodierer 21 in der Lage, den zugeordneten Datenstrom 36 zu decodieren, um auf diese Weise jeweilige Nutzdaten 40 zu erhalten, wie z.B. Video- oder Audiodaten oder dergleichen, die von Nutzdatenabschnitten der Datenpakete 38 stammen.

Die für jede Datensenke 20 vorhandenen Wahrscheinlichkeitswertbestimmer 28 sind nun dazu da, für ein aktuelles Transportstrompaket 12, für das der Verteiler 26 die Fehlerhaftigkeit anzeigt 32, einen Wahrscheinlichkeitswert zu bestimmen, der angibt, wie wahrscheinlich das aktuelle Transportstrompaket 12 der jeweiligen Datensenke 20 zugeordnet ist, und zwar auf Basis von Informationen des Nutzdatenabschnitts des vorbestimmten Transportstrompaketes 12, das beispielsweise für den Zuweiser 30 für diesen Zweck von dem Verteiler 26 an die Wahrscheinlichkeitswertbestimmer 28 weitergeleitet wird. Für die Bestimmung der Wahrscheinlichkeitswerte besteht eine Vielzahl von unterschiedlichen Optionen, die im Folgenden noch näher erläutert werden. Wie es in Fig. 1 gezeigt ist, kann jeder Wahrscheinlichkeitswertbestimmer 28 in zwei Teile untergliedert sein, nämlich einen Protokolldatenfortschreibungsteil 42 zum Zusammenfügen der bisher an die jeweilige Datensenke 20 weitergeleiteten Nutzdatenabschnitte der Transportstrompakete 12 sowie einen Annahmewahrscheinlichkeitsbestimmungsteil 44, wobei diese Form der Aufteilung allerdings nur exemplarisch ist.

Der Zuweiser 30 erhält also pro Datensenke 20 einen Wahrscheinlichkeitswert von dem jeweiligen Wahrscheinlichkeitswertbestimmer 28 und bestimmt auf Basis dieser Wahrscheinlichkeitswerte, welcher Datensenke 20 das aktuelle Transportstrompaket 12 zugewiesen werden soll oder, gemäß einem Ausführungsbeispiel, ob gegebenenfalls jegliche Zuweisung unterbleiben soll, weil die Wahrscheinlichkeitswerte nicht aussagekräftig genug sind. Der Zuweiser 30 ist beispielsweise ausgebildet, das aktuelle Transportstrompaket 12 derjenigen Datensenke 20 zuzuweisen, für die der Wahrscheinlichkeitswert maximal ist.

Wie es im Nachfolgenden noch näher beschrieben werden wird, sind die Wahrscheinlichkeitswertbestimmer 28 beispielsweise ausgebildet, um den Wahrscheinlichkeitswert auf Basis einer Vielzahl von Einzelwahrscheinlichkeitswerten zu bestimmen, wie z.B. durch Aufsummierung letzterer, wobei diese Einzelwahrscheinlichkeitswerte beispielsweise immer ein Maß für eine Ähnlichkeit eines Ausschnitts des Nutzdatenabschnitts des aktuellen Transportstrompakets 12 mit einem Inhalt sind, der sich in dem aktuellen Transportstrompaket an der entsprechenden Stelle mit hoher Wahrscheinlichkeit befinden müsste, wenn man annimmt, dass das aktuelle Transportstrompaket eine lückenlose Fortsetzung des bereits erhaltenen Teils des Datenstroms 36 der jeweiligen Datensenke 20 darstellt (d.h. ohne Verlust eines der vorhergehenden Transportstrompakete für die jeweilige Datensenke), oder der mit hoher Wahrscheinlichkeit an dem entsprechenden oder einem beliebigen Abschnitt des Nutzdatenabschnitts eines Transportstrompakets 12, der der jeweiligen Datensenke zugeordnet ist, vorhanden ist, unabhängig davon, um welches Transportstrompaket in der Reihe von der jeweiligen Datensenke zugeordneten Transportstrompaketen es sich gerade handelt. Wie gesagt, wird aus der nachfolgenden Beschreibung der Vorgang noch deutlicher werden.

Bezug nehmend auf Fig. 2 wird nun ein Ausführungsbeispiel für einen möglichen Aufbau der Transportstrompakete 12 und Datenpakete 38 beschrieben. Hinsichtlich des Aufbaus der Datenpakete 38 wird darauf hingewiesen, dass selbiger für alle Datensenken 20 so wie nunmehr Bezug nehmend auf Fig. 2 beschrieben sein könnte, oder aber, dass der Aufbau auch für die Datensenken 20 unterschiedlich sein könnte, d.h. für manche Datensenken 20 so wie nun Bezug nehmend auf Fig. 2 dargestellt, und für andere wiederum anders.

Fig. 2 zeigt unten einen exemplarischen Ausschnitt aus dem Transportstrom 14 mit einem Transportstrompaket 12a und einem unmittelbar nachfolgenden Transportstrompaket 12b. In diesem Teil der Fig. 2 wird somit quasi die Transportschicht 46 gezeigt. Wie es in Fig. 2 gezeigt ist, weist jedes Transportstrompaket 12a und 12b beispielsweise neben dem Nutzdatenabschnitt 48 einen Transportstrompaketheader 50 auf. Darüber hinaus weist jedes Transportstrompaket 12a, b noch einen systematischen Vorwärtsfehlererkennungscode 52 auf, d.h. Redundanzdaten 52, die per systematischer Vorwärtsfehlererkennung eine Erkennung von Fehlern in dem jeweiligen Transportstrompaket 12a bzw. 12b ermöglichen. Gegebenfalls ermöglichen die Daten 52 auch eine Vorwärtsfehlerkorrektur. Die Redundanzdaten 52 können das Transportstrompaket 12a bzw. 12b beispielweise ganz oder nur bezogen auf den Header 50 oder sogar nur bezogen auf eine Identifikationsangabe 54 schützen.

In dem Transportstrompaketheader 50 befindet sich beispielsweise ein Feld bzw. eine Identifikationsangabe 54, die die Datensenke 20 identifiziert, der das jeweilige Transportstrompaket 12a bzw. 12b zugeordnet ist. In Fig. 2 wird exemplarisch davon ausgegangen, dass das Transportstrompaket 12a und das Transportstrompaket 12b unterschiedlichen Datensenken zugeordnet sind.

In Fig. 2 wird auch exemplarisch davon ausgegangen, dass für die Datensenken 20, der die Transportstrompakete 12a und 12b zugeordnet sind, die Datenströme 36, die an dieselben adressiert sind, in die Nutzdatenabschnitte 48 der jeweiligen Transportstrompakete 12a, b, die der jeweiligen Datensenke 20 zugeordnet sind, per Fragmentierung eingebettet sind. Jedes Transportstrompaket, in das ein Anfang eines der Datenpakete des eingebetteten Datenstroms fällt, weist deshalb in dem Transportstrompaketheader 50 eine Zeigerinformation 56 auf, die anzeigt 58, wo in dem Nutzdatenabschnitt 48 des jeweiligen Transportstrompakets der Anfang des in dem jeweiligen Transportstrompaket 12a beginnenden Datenpakets 62 liegt. In dem restlichen Teil des Nutzdatenabschnittes 48 befindet sich dann ein noch nicht in einem der vorangehenden Transportstrompakete für die jeweilige Datensenke befindlicher Endabschnitt 64 des unmittelbar vorangehenden Datenpakets des Datenstroms für diese Datensenke. In dem Fall von Fig. 2 ist ein solches Fallen eines Anfangs 60 in einen Nutzdatenabschnitt 48 exemplarisch für das Transportstrompaket 12a dargestellt. Anhand des Transportstrompaketes 12b ist in Fig. 2 exemplarisch gezeigt, dass allerdings auch die Möglichkeit bestehen kann, dass ein Transportstrompaket in seinem Transportstrompaketheader 50 keine Zeigerinformation 56 aufweist, da beispielsweise der Anfang eines Datenpakets für die Datensenke, der das Transportstrompaket 12b zugeordnet ist, mit dem Anfang des Nutzdatenabschnitts 48 zusammenfällt, oder weil der Inhalt des Nutzdatenabschnitts 48 einer Fortführung eines aktuellen Datenpakets entspricht, die sich aber über den Nutzdatenabschnitt 48 hinaus erstreckt, oder bis zu dem Ende des Nutzdatenabschnitts 48. An dieser Stelle sei nur ganz kurz darauf hingewiesen, dass in dem Nutzdatenabschnitt 48 neben reinen Nutzdaten für Datenpakete auch Füllbits bzw. Füllinformationen vorhanden sein könnten, wie z.B. dann, wenn das Hinzufügen einer Zeigerinformation 56 dazu führen würde, dass das aktuelle Datenpaket genau mit dem Ende des Nutzdatenabschnittes 48 enden würde, so dass das Nachfolgedatenpaket nicht mehr in dem aktuellen Nutzdatenabschnitt beginnen könnte, und ein Fehlen der Zeigerinformation 56 dann dazu führt, dass am Ende des Nutzdatenabschnittes 48 noch Platz vorhanden ist. Letzteres gilt zumindest dann, wenn beispielsweise die Transportstrompakete 12a und 12b eine feste Länge besitzen, oder aber eine Länge, die nur in vorbestimmten Quantisierungsstufen einstellbar sind. Die Quantisierungsstufe könnte ebenfalls in dem Transportstrompaketheader 50 angezeigt werden, oder aber auf andere unregelmäßiger übertragene Art und Weise.

Das Ausführungsbeispiel von Fig. 2 zeigt somit, dass Transportstrompakete 12b, in die kein Anfang 60 eines der Datenpakete 38 fällt, die der zugeordneten Datensenke 20 zugeordnet sind, keine Zeigerinformation aufweisen, so dass der Nutzdatenabschnitt 48 der Transportstrompakete, in die kein Anfang 60 fällt, gegenüber dem Nutzdatenabschnitt 48 von Transportstrompaketen 12a, in die ein solcher Anfang 60 fällt, um ein Ausbleiben der Zeigerinformation vergrößert sein kann, d.h. um die Länge der Feldangabe 56. In anderen Worten ausgedrückt, kann der Transportstrompaketheader 50 des Transportstrompaketes 12b um die Länge der Zeigerinformation 56 gegenüber dem Transportstrompaketheader 50 kleiner und dementsprechend der Nutzdatenabschnitt 48 des Transportstrompaketes 12b gegenüber dem Nutzdatenabschnitt 48 des Transportstrompaketes 12a vergrößert sein. Ein Flag 66 in dem Transportstrompaketheader 50 jeden Transportstrompaketes 12a, b könnte angeben, ob eine Zeigerinformation 56 in dem jeweiligen Transportstrompaketheader 50 vorhanden ist oder nicht.

Ein wenig oberhalb der Transportschichtebene 46 ist in Fig. 2 die Protokollebene 68 der Datenströme 36 angezeigt, wie z.B. des Datenstromes, dem das Transportstrompaket 12a zugeordnet ist. In Fig. 2 ist exemplarisch ein Ausschnitt mit vier aufeinanderfolgenden Datenpaketen 38_{a-d} gezeigt. Exemplarisch handelt es sich bei dem Datenpaket 38b um dasjenige, dessen Anfang 60 in den Nutzdatenabschnitt 48 des Transportstrompaketes 12a fällt, und dessen erster Teil somit dem Abschnitt 62 in dem Nutzdatenabschnitt 48 dieses Transportstrompaketes 12a entspricht. Der Nachfolgeteil 70 dieses Datenpaketes 38b würde gemäß der fragmentarischen Einbettung in den Nutzdatenabschnitt eines nachfolgenden Transportstrompakets, das dieser Datensenke zugeordnet ist, eingeschrieben sein, wobei gegebenenfalls wieder eine Zeigerinformation auf den Anfang des nachfolgenden Datenpakets 38c in diesem Nutzdatenabschnitt zeigt, wenn der Abschnitt 70 nicht zu lang ist usw.

Kurz sei noch erwähnt, dass, obwohl bisher bei der Beschreibung von Fig. 2 suggeriert worden ist, dass die Datenpakete 38ₐ-38_{d} gleichgeordnete, einer gemeinsamen Reihenfolge angehörende Datenpakete sein können, in den Strom von Datenpaketen 38_{a-d} auch Datenpakete eingestreut sein könnten, die andere Funktion übernehmen, wie z.B. die Übertragung eines systematischen Vorwärtsfehlerschutzcodes für die anderen Datenpakete. So könnte es sich beispielsweise bei den Datenpaketen 38ₐ-38_{d} um MPE-Sektionen handeln, zwischen die MPE-FEC-Sektionen eingestreut sind. Bezogen auf den Abschnitt 70 könnte dies bedeuten, dass selbiger nicht in dem unmittelbar folgenden Transportstrompaket enthalten ist, das der jeweiligen Datensenke zugeordnet ist, sondern erst in einem übernächsten oder noch späteren Transportstrompaket.

Wie es in Fig. 2 gezeigt ist, kann wiederum jedes der Datenpakete 38_{a-d} einen jeweiligen Nutzdatenabschnitt 72 und einen Datenpaketheader 74 aufweisen. Zusätzlich könnte jedes Datenpaket 38_{a-d} auch einen systematischen Fehlerschutzcode aufweisen, der zusammen mit dem jeweiligen Datenwort 38_{a-d} inklusive Header 74 und Nutzdatenabschnitt 72 ein systematisches Vorwärtsfehlercodewort bildet, aber aus Übersichtlichkeitsgründen ist diese Möglichkeit in Fig. 2 nicht dargestellt. Allerdings ist dargestellt, dass beispielsweise jeder Datenpaketheader 74 einen Redundanzdatenabschnitt 76 aufweisen kann, durch welchen der Header 74 ein systematisches Vorwärtsfehlercodewort zur Fehlererkennung und/oder Fehlerkorrektur bildet, in dem der restliche Teil 78 des Headers 74 zu diesem Redundanzdatenteil 76 eine entsprechende Vorwärtsfehlererkennungs/Korrekturbeziehung aufweist.

Im Unterschied zu den Transportstrompaketen 12a, 12b weisen die Datenpakete 38_{a-d} aus Fig. 2 exemplarisch eine variierende Länge auf und besitzen zur Anzeige der Länge beispielsweise eine Längenangabe 80 in ihrem Datenpaketheader, die die Länge des jeweiligen Datenpakets 38_{a-d} angibt.

Zudem besitzen die Datenpaketheader 74 beispielsweise ein Adressfeld 82, dass die Datensenke, der der Datenstrom 36 zugeordnet ist, beispielsweise in eindeutiger Weise anzeigt oder derselben zumindest in beispielsweise eindeutiger Weise zugeordnet ist. Die Eindeutigkeit kann auf die Adressangaben in Datenpaketen von Datenströmen anderer Datensenken bezogen sein. Ein weiteres Feld 84 in den Datenpaketheadern 74 könnte vorhanden sein, um beispielsweise zu Synchronisationszwecken oder dergleichen einen für alle Datenpakete einheitlichen Wert aufzuweisen oder einen Wert, der zumindest für alle Datenpakete gleichen Typs gleich ist, wie z.B. für MPE-Sektionen einerseits und MPE-Pakete andererseits.

In Fig. 2 ist noch angedeutet, dass in die Nutzdatenabschnitte 72 der Datenpakete 38_{a-d} noch ein Datenstrom 86 einer noch höheren Protokollebene 88 eingebettet sein könnte, wobei diese Einbettung exemplarisch vorsieht, dass Datenpakete 90 dieses Datenstroms beispielsweise ohne Fragmentierung jeweils einzeln in einem Nutzdatenabschnitt 72 eines Datenpakets 38_{a-d} eingebettet sind, wie in Fig. 2 exemplarisch mit gepunkteten Linien dargestellt ist. Die Datenpakete 90 können somit beispielsweise ebenfalls variierende Länge aufweisen. Sie können ebenso wie die Datenpakete der niedrigeren Protokollschicht 68 jeweils einen Nutzdatenabschnitt 92 und einen Header 94 aufweisen, und in dem Header 94 kann beispielsweise ebenfalls eine Längenangabe 96 enthalten sein, die die Länge des jeweiligen Pakets 90 angibt. Darüber hinaus könnte exemplarisch in jedem Paket 94 ferner noch ein Adressfeld 98 vorhanden sein, das die adressierte Datensenke anzeigt bzw. mit der adressierten Datensenke des Datenstroms 36 in einem eindeutigen Zusammenhang steht.

Nachdem Bezug nehmend auf die Fig. 2 eine Möglichkeit für einen Aufbau eines Transportstrompakets und die Einbettung der Datenströme der Datensenken 20 in Fig. 1 in denselben beschrieben worden ist, wird darauf hingewiesen, dass die Möglichkeit von Fig. 2 natürlich nur eine exemplarische unter einer Vielzahl von Möglichkeiten darstellt, in dem Zusammenhang mit welchem das Ausführungsbeispiel von Fig. 1 nützlich wäre, um das Verwerfen von fehlerhaften Transportstrompaketen zu vermeiden, wie es im Folgenden Bezug nehmend auf Fig. 1 und 2 gemeinsam detailliert beschrieben wird. Bei dem Ausführungsbeispiel von Fig. 2 kann es sich beispielsweise bei dem Datenstrom 36 um einen MPE-Datenstrom und bei dem Datenstrom 86 um einen IP-Datenstrom handeln. Wie bereits erwähnt, sind die Datenpakete 38_{a-d} vorzugsweise Vorwärtsfehlerschutz-Code- geschützt, wobei der Vorwärtsfehlerschutzcode in hierfür eigens vorgesehenen Datenpaketen des Datenstroms 36 positioniert sein könnte. Der Vorwärtsfehlercode ist aus diesem Grund in Fig. 2 lediglich exemplarisch bei 100 versinnbildlicht. Wie bereits erwähnt, könnte es sich bei dem Vorwärtsfehlerschutzcode 100 um einen systematischen Vorwärtsfehlerschutzcode handeln, der auf einer Interleaverfunktionalität basiert, wonach der Vorwärtsfehlerschutzcode 100 die Nutzdatenabschnitte 72 der Datenpakete 38_{a-d} in einer Anordnung schützt, bei welcher die Nutzdatenabschnitte 72 der Reihe ihres Auftretens in dem Datenstrom 36 nach in eine Interleaver-Tabelle eingetragen sind, wie z.B. spaltenweise, um beispielsweise zeilenweise systematische Vorwärtsfehlercodeworte mit Zeilen dieser Interleaver-Tabelle einerseits und einem jeweiligen Ausschnitt aus den FEC-Daten 100 anderseits zu bilden. In Fig. 2 ist dies bei 102 angedeutet, wo die Interleaver-Tabelle 104 mit aufeinanderfolgenden Nutzdatenabschnitten a-e der aufeinanderfolgenden Datenpakete 38ₐ-38_{d}, deren spaltenweises Einfügen in die Interleaver-Tabelle 104 und das seitliche Anfügen der Redundanzdaten 100 an die Interleaver-Tabelle 104 angedeutet ist, um pro Zeile 106 ein systematisches Vorwärtsfehlercodewort zu bilden.

Wieder zurückkehrend zur Fig. 1 wird durch eine Zusammenschau der Figuren 1 und 2 deutlich, dass jeder Wahrscheinlichkeitswertbestimmer 28 unterschiedlichste Möglichkeiten besitzt, um den jeweiligen Wahrscheinlichkeitswert für die jeweilige Senke 20 zu bestimmen, wofür im Folgenden konkrete Beispiele beschrieben werden. Wie bereits oben angedeutet, könnten alle diese einzelnen Beiträge in Wahrscheinlichkeitswertbeiträgen münden, die dann aufaddiert werden, um den jeweiligen schließlichen Wahrscheinlichkeitswert für die jeweilige Datensenke 20 zu erhalten, der dann in dem Zuweiser 30 zusammen mit den anderen Wahrscheinlichkeitswerten der anderen Datensenken 20 verwendet wird, um die schließlich auszuwählende Datensenke zu bestimmen und diese dem Verteiler 26 mitzuteilen 34.

Beispielsweise wird in den Wahrscheinlichkeitswertbestimmern 28 für jede Datensenke 20 ein erster Abschnitt des aktuellen Transportstrompakets 12 in einer für alle Datensenken 20 oder nur für die jeweilige Datensenke 20 konstanten Weise oder abhängig von bereits vorher zu der jeweiligen Datensenke 20 zugewiesenen Transportstrompaketen 12, wie sie am Eingang der Wahrscheinlichkeitswertbestimmer 28 eingehen, lokalisiert. Bei diesem ersten Abschnitt kann es sich beispielsweise um die Zeigerinformation 56 handeln. Wenn die Zeigerinformation 56 immer an der gleichen Position in den Transportstrompaketen 12 bzw. den Transportstrompaketheadern 50 angeordnet ist, dann ist die Lokalisierung für alle Datensenken 20 in den Wahrscheinlichkeitswertbestimmern 28 gleich. Alternativ könnte es sein, dass sich die Transportstrompaketheader 50 für die unterschiedlichen Datensenken 20 aus irgendwelchen Gründen unterscheiden, und somit die Position der Zeigerinformation 56 zwar für jede Datensenke 20 in den zugeordneten Transportstrompaketen 12 untereinander gleich, aber zu Transportstrompaketen 12 die anderen Datensenken 20 zugeordnet sind, unterschiedlich ist. Jeder Wahrscheinlichkeitswertbestimmer 28 würde dann die Zeigerinformation 56 bzw. den ersten Abschnitt an einer zwar konstanten, aber zu anderen Wahrscheinlichkeitswertbestimmern 28 unterschiedlichen Position in dem aktuellen Transportstrompaket aufsuchen. Die Struktur des Headers 50 der der jeweiligen Datensenke 20 zugeordneten Transportstrompakete 12 kann in den Bestimmern 28 natürlich auch aus den vorher zu der jeweiligen Datensenke 20 zugewiesenen Transportstrompaketen 12 hergeleitet werden. Sobald das geschehen ist, lokalisieren die Wahrscheinlichkeitswertbestimmer 28 beispielsweise einen zweiten Abschnitt 62 des aktuellen Transportstrompakets 12 abhängig von einem Inhalt des vorbestimmten Transportstrompakets 12 in dem ersten Abschnitt, d.h. 56, d.h. also so, als handele es sich bei dem Inhalt des vorbestimmten Transportstrompaketes 12 in dem ersten Abschnitt 56 tatsächlich um eine Zeigerinformation 56. Bei dem Transportstrompaket 12b wäre diese Annahme offensichtlich falsch, wie es bei 56' gezeigt ist. Würde der Inhalt des Abschnittes 56' des Transportstrompaketes 12b als Zeigerinformation verwendet werden, so würde beispielsweise der Abschnitt 62' des Nutzdatenabschnitts 48 als zweiter Abschnitt lokalisiert werden. Jeder Wahrscheinlichkeitswertbestimmer 28 würde nun den zweiten Abschnitt 62 bzw. 62' daraufhin analysieren, ob es sich um den Anfang eines der jeweiligen Datensenke 20 zugeordneten Datenpakets 38 handeln kann oder nicht. Dazu kann die Datensenke beispielsweise das Adressfeld 82 oder das Adressfeld 98 auswerten. Das heißt, jeder Wahrscheinlichkeitswertbestimmer 28 würde an der Stelle, an der das jeweilige Feld 82 bzw. 98 in dem Abschnitt 62 bzw. 62' angeordnet sein müsste, wenn es sich um den Anfang eines Datenpakets, das an die jeweilige Datensenke 20 adressiert ist, handelte, den dortigen Inhalt mit dem Inhalt dieser Abschnitte vergleichen, der sonst typisch für diese Felder in den Datenpaketen 38 bzw. 90 für die jeweilige Datensenke sind. Das Ergebnis wäre ein entsprechender Wahrscheinlichkeitsbeitrag, der in den jeweiligen Wahrscheinlichkeitswert für die jeweilige Datensenke 20 einginge, und basierend auf welchem dann ja der Zuweiser 30 die Zuweisung vornimmt. Als Beitragswert kann beispielsweise ein Maß für die Ähnlichkeit des erwarteten Inhalts und des tatsächlichen Inhalts herangezogen werden, wobei das Maß extrem einfach gestaltet werden kann, nämlich binär, so dass der Beitrag ungleich Null wäre, wenn Übereinstimmung vorliegt, und Null, wenn keine Übereinstimmung vorliegt.

Nach dem vorhergehenden Absatz kann es also sein, dass jeder Wahrscheinlichkeitswertbestimmer 28 ein erstes Feld 82 bzw. 98 in dem zweiten Abschnitt 62 einfach daraufhin überprüft, ob es mit Informationen übereinstimmt, die für die jeweilige Datensenke 20 mehr oder weniger, wie z.B. zumindest seit der letzten Zuweisung eines Transportstrompaketes 12 zu der jeweiligen Datensenke 20 durch den Verteiler 26 oder den Zuweiser 30, konstant ist. Es kann aber auch sein, dass die Wahrscheinlichkeitswertbestimmer 28 zwei Felder in dem zweiten Abschnitt 62 daraufhin überprüfen, ob dieselben eine vorbestimmte Beziehung aufweisen, wie sie zwischen den Feldern 78 und 76 in den Headern 74 der Datenpakete 38_{a-d} zutrifft. Diese Übereinstimmung wäre zwar vielleicht kein Datensenkenindividueller Hinweis auf die Zuordnung des aktuellen Transportstrompaketes zu der jeweiligen Datensenke 20, aber die Wahrscheinlichkeitswertbestimmer 28 könnten diese eben genannte Überprüfung dazu verwenden, den Wahrscheinlichkeitsbeitrag in dem Fall zu erhöhen, dass in dem Abschnitt 62 ein Inhalt auffindbar ist, der eine Ähnlichkeit mit Datensenken-spezifischen Informationen aufweist, denn die Tatsache, dass die vorerwähnte Übereinstimmung in potentiellen Feldern 82, 98 nicht nur Zufall ist, setzt ja voraus, dass es sich zumindest um den Anfang eines Datenpakets 38_{a-d} handelt, unabhängig von der adressierten Datensenke. Auch dieser Wahrscheinlichkeitsbeitragswert kann zur vorerwähnten Aufsummierung für den schließlichen Wahrscheinlichkeitswert für die jeweilige Datensenke 20 verwendet werden.

Bisher ist also beschrieben worden, dass die Wahrscheinlichkeitswertbestimmer 28 ein erstes Feld 110 des Abschnitts 62 darauf hin untersuchen, ob es sich wohl um den Inhalt eines Felds 82 oder 98 handelt, das einen Hinweis auf die Adressierung der jeweiligen Datensenke zulässt, und dass zwei weitere Felder 112 und 114 daraufhin untersucht werden, ob sie die Felder 78 und 76 von Headern 74 zusammenfassen, bzw. eine systematische-Vorwärtsfehlererkennungscode-Beziehung zueinander aufweisen.

Zusätzlich oder alternativ können die Bestimmer 28 ein viertes und fünftes Feld daraufhin überprüfen, ob dieselbe eine vorbestimmte Beziehung zueinander aufweisen, die für redundante Angaben zutrifft, also ob z.B. diese Felder 116, 118 sich beispielsweise wie die Felder 98, 82 zueinander verhalten, die ja beide irgendwie die Datensenke 20 adressieren. Auch dieser Zusammenhang ist gegebenenfalls nicht datensenkenspezifisch, aber kann von den Bestimmern 28 beispielsweise zur Erhöhung des Wahrscheinlichkeitswertes verwendet werden, wenn sich zusätzlich das Feld 110 als ein wahrscheinlich für die jeweilige Datensenke datensenkenspezifisches Feld herausstellt, wie es im Vorhergehenden beschrieben worden ist.

Die bisherige Beschreibung von möglichen Untersuchungsoptionen für die Bestimmer 28 ließen außer Acht, dass jeder Bestimmer 28 aufgrund der Beobachtung der bisher aus den zugewiesenen Transportstrompaketen erhaltenen Datenpaketen 38 der jeweiligen Datensenke 20 auch bestimmte Erwartungen an den Inhalt eines nächsten Transportstrompakets für die jeweilige Datensenke 20 stellt. So kann es beispielsweise sein, dass jeder Bestimmer 28 für eine Datensenke 20, der zuletzt ein Transportstrompaket 12 zugewiesen wurde, in dem sich ein der jeweiligen Datensenke 20 zugewiesenes Datenpaket 38 mit einer Längenangabe 80 befand, aus der hervorgeht, dass sich selbiges Datenpaket über das zuletzt der jeweiligen Datensenke 20 zugewiesene Transportstrompaket hinaus erstreckt, abhängig von der Längenangabe 80 einen Abschnitt 120 an einem Anfang des Nutzdatenabschnitts 48 des aktuellen Transportstrompakets 12 lokalisiert und daraufhin analysiert, ob es sich um eine Fortsetzung des noch nicht abgeschlossenen Datenpakets der jeweiligen Datensenke handeln kann. Beispielsweise könnte an dem Ende jedes Datenpakets 38_{a-d} ein Flag enthalten sein, das das Ende des jeweiligen Datenpakets angibt, und ein Vergleich der entsprechenden Position an dem Ende des Abschnitts 120 mit einem solchen EOF-Flag könnte einen weiteren Wahrscheinlichkeitsbeitragswert für den schließlichen Wahrscheinlichkeitswert der jeweiligen Datensenke ergeben. Es kann aber auch sein, dass sich in dem Abschnitt 120 noch ein Abschnitt eines Datenpaketes befindet, der datensenkenspezifische Informationen, wie z.B. eines der Felder 82 oder 98 beinhaltet. Auch für solche Felder könnten Ähnlichkeitsuntersuchungen angestellt werden, um weitere Beitragswerte zu ermitteln.

Gemäß den vorhergehend beschriebenen Beispielen für mögliche Untersuchungen, die durch die Bestimmer 28 angestellt werden könnten, um zu entsprechenden Wahrscheinlichkeitsbeitragswerten zu gelangen, lokalisierten die Bestimmer 28 jeweils bestimmte Felder anhand von bestimmten Annahmen, die wiederum von Informationen aus zuvor zugewiesenen Transportstrompaketen abgeleitet sein konnten oder nicht. Ergibt sich bei diesen Untersuchungen eine Übereinstimmung, so ist die Wahrscheinlichkeit für die jeweilige Datensenke sicherlich relativ hoch, dass das aktuelle Transportstrompaket 12 zu dieser Datensenke 20 gehört, da ja die Übereinstimmung nicht an irgendeiner Position des aktuellen Transportstrompakets festgestellt worden ist, sondern an einer bestimmten. Zusätzlich oder alternativ kann es jedoch sein, dass jeder Wahrscheinlichkeitswertbestimmer 28 auch ein beliebiges Feld in dem aktuellen Transportstrompaket 12 daraufhin überprüft, ob der Inhalt desselben mit Informationen übereinstimmt, die für die jeweilige Datensenke 20 konstant sind, wie z.B. zumindest seit der letzten Zuweisung eines Transportstrompakets 12 zu der jeweiligen Datensenke. Eine Datensenke 20 kann ja durch den Verlust eines an sie gerichteten Transportstrompakets eventuell die Übersicht verloren haben, wo sich potentiell der Anfang eines an sie gerichteten Datenpakets in dem aktuellen Transportstrompaket befinden könnte, und so könnte sich eines der Felder 98 oder 82 beispielsweise an einer beliebigen Position in dem aktuellen Transportstrompaket befinden. Zudem könnte das zuvor zugewiesene Transportstrompaket ausgerechnet ein solches gewesen sein, das zwar fehlerhaft war, aber trotzdem der aktuellen Datensenke zugewiesen worden ist, und zwar gerechtfertigter Weise oder ungerechtfertigter Weise, und somit könnte beispielsweise die Längenangabe 80 des noch abzuschließenden Datenpakets der jeweiligen Datensenke fehlerhaft sein und sich die Felder 98 und 82 des nachfolgenden Datenpakets an einer unerwartet anderen Stelle befinden. Werden Ähnlichkeiten zu typischen Inhalten des Wertes 82 und/oder 98 festgestellt, so ist natürlich vorzugsweise der sich ergebende Wahrscheinlichkeitsbeitragswert für den schließlichen Wahrscheinlichkeitswert der jeweiligen Datensenke 20 geringer als für die vorerwähnten Untersuchungen an bestimmten vordefinierten lokalisierten Positionen des aktuellen Transportstrompakets.

Ähnlich wie im Vorhergehenden bezüglich der lokalisierten Felder beschrieben, kann beispielsweise zusätzlich oder aber auch alternativ, eine Untersuchung von weiteren Feldpaaren an beliebigen Positionen durchgeführt werden, ob dieselben eine vorbestimmte systematische-Vorwärtsfehlererkennungscode-Beziehung zueinander aufweisen oder eine Beziehung, wie sie für redundante Angaben in den Headern der Protokollebenen 68 und 88 zutrifft. Es könnte aber auch sein, dass letztgenannte Untersuchungen an lokalisierten Positionen durchgeführt werden, nämlich abhängig von der Lage des Feldes, an der sich eine Ähnlichkeit mit einer datensenkenspezifischen Information, wie sie z.B. für die Felder 82 oder 98 typisch ist, ergeben hat, so dass sich die Wahrscheinlichkeit erhöht, dass sich diese Ähnlichkeit an dem beliebigen Feld an einer beliebigen Position nicht zufällig ergab.

Ferner könnten die Bestimmer 28 ausgebildet sein, um auszunutzen, dass normalerweise die Längenangabe 80 der Datenpakete 38 mit den Zeigerinformationen 56 korreliert sind. Das liegt daran, dass beispielsweise der Bestimmer 28 für die Datensenke 20 der der Datenstrom 36 in Fig. 2 zugeordnet ist, auf Basis der Längenangabe 80 und der Größe des noch nicht empfangenen Teils 64 des Datenpakets 38ₐ mit hoher Wahrscheinlichkeit annehmen kann, dass die Zeigerinformation 56 des als nächstes zu erwartenden Transportstrompakets eine Zeigerinformation 56 aufweist, die die Größe dieses Abschnitts 64 überbrückt, wie es denn auch in Fig. 2 mit dem Pfeil 58 angedeutet ist. Ein entsprechender Vergleich des Feldes 56 des aktuellen Transportstrompakets mit der Längenangabe 80 des zuletzt empfangenen Datenpakets der jeweiligen Datensenke kann somit von entsprechenden Bestimmern 28 für Datensenken, an denen solche noch nicht vollständig empfangenen Datenpakete 38ₐ vorliegen, verwendet werden, um wieder einen Wahrscheinlichkeitsbeitragswert zu bestimmen.

Häufig ist es auch so, dass Transportstrompakete, die einer jeweiligen Datensenke 20 zugeordnet sind, solche beinhalten, die zueinander identisch sind oder zumindest einen gleichen Inhalt aufweisen. Dies kann z.B. sein, wenn für die jeweilige Datensenke ein bestimmtes Datenkarussell übertragen wird. Die in den Transportstrompaketen solcher Datensenken intermittierend wiederkehrenden identischen Inhalte der Transportstrompakete 12 könnten beispielsweise eine Signalisierungstabelle für ein solches Datenkarussell betreffen. Die Bestimmer 28 könnten ausgebildet sein, um für die jeweilige Datensenke 20, zu der der Bestimmer 28 gehört, unter den bereits vorher der jeweiligen Datensenke 20 zugewiesenen Transportstrompaketen 12 einen intermittierend wiederkehrenden identischen Inhalt festzustellen und den Wahrscheinlichkeitswert für die jeweilige Datensenke dann durch Vergleich eines Inhalts des Nutzdatenabschnitts des aktuellen Transportstrompakets 12 mit dem intermittierend wiederkehrenden identischen Inhalt zu bestimmen.

Bei der vorhergehenden Beschreibung wurde häufig so getan, als ob der Datenstrom 36 derjenige sei, der für die Datensenke 20 bestimmt ist. Das ist zwar auch grundsätzlich richtig, aber ebenso richtig ist es natürlich bei dem Ausführungsbeispiel von Fig. 2, dass der Datenstrom 86 derjenige ist, der an die Datensenke 20 adressiert ist. Er ist lediglich in einer Einkapselierungsstruktur eingekapselt, nämlich in die Schicht 68, und zusammen mit Einkapselungsdaten, nämlich den Headerdaten 74, der Einkapselierungsstruktur in die Transportstrompakete 12 fragmentiert, die der jeweiligen Datensenke 20 zugeordnet sind. Der Bestimmer 28 kann nun für die jeweilige Datensenke 20, für die der Bestimmer 28 gerade vorgesehen ist, mehrere potentielle Orte, wie z.B. eben die vorerwähnten Orte 116 und 118, in dem aktuellen Transportstrompaket 12 bestimmen, an denen sich zueinander eine vorbestimmte Beziehung aufweisende Inhalte der Einkapselierungsdaten 74 einerseits und der Datenpakete 90 des Datenstroms 86, der an die jeweilige Datensenke 20 adressiert ist, andererseits befinden könnten, um den Wahrscheinlichkeitswert bzw. einen entsprechenden Wahrscheinlichkeitsbeitragswert für den schließlichen Wahrscheinlichkeitswert für die jeweilige Datensenke 20 auf Basis davon zu bestimmen, ob zwischen Inhalten des aktuellen Transportstrompakets 12 an den bestimmten mehreren potentiellen Orten 116, 118 die vorbestimmte Beziehung besteht oder nicht besteht.

Die soeben erwähnte Möglichkeit existiert natürlich nur, wenn die potentiellen Orte auch erwartungsgemäß in einem Transportstrompaket liegen und nicht in aufeinanderfolgenden. So könnte es beispielsweise sein, dass die Bestimmer zusätzlich oder alternativ einen oder mehrere potentielle Orte im aktuellen Transportstrompaket 12 bestimmen, an dem oder denen sich ein Inhalt der Datenpakete des Datenstroms, der an die jeweilige Datensenke 20 adressiert ist, befinden könnte, der zu einem Inhalt der Einkapselungsdaten in einem der bereits vorher der jeweiligen Datensenke 20 zugewiesenen Transportstrompakete 12 eine vorbestimmte Beziehung aufweist, und den Wahrscheinlichkeitswert auf Basis davon zu bestimmen, ob zwischen Inhalten des vorbestimmten Transportstrompakets an dem einen oder den mehreren potentiellen Orten und der bereits vorher der jeweiligen Datensenke zugewiesenen Transportstrompakete 12 die bestimmte Beziehung besteht oder nicht. So kann es beispielsweise sein, dass ein Bestimmer 28 für eine Datensenke, die ein aktuelles Datenpaket 38ₐ unvollständig erhalten hat, das Feld 82 bereits zum schon erhaltenen Teil dieses Datenpakets 38ₐ gehört, wohingegen das Feld 98 des darin eingebetteten Datenpakets 90 in dem noch erwarteten Transportstrompaket für die jeweilige Datensenke liegt, weshalb in diesem Fall der Bestimmer 28 in einem aktuellen Transportstrompaket eine zu dem Feld 98 entsprechende Stelle desselben mit dem Inhalt des Feldes 82 vergleichen würde, um zu einem (weiteren) Wahrscheinlichkeitsbeitragswert zu gelangen.

Es sei noch einmal darauf hingewiesen, dass die Wahrscheinlichkeitsbeitragswerte, die im Vorhergehenden genannt worden sind, auch anders miteinander kombiniert werden könnten als per Aufsummierung. Beispielsweise könnten sie miteinander multipliziert werden oder dergleichen. Eine Mischung besagter Kombinationsmöglichkeiten wäre ebenfalls möglich.

Ein weiterer Umstand könnte von den Bestimmern 28 ausgenutzt werden, um einen weiteren Wahrscheinlichkeitsbeitragswert zu bestimmen, nämlich die Tatsache, dass üblicherweise der Zeitmultiplex, mit welchem die Datenströme, die an die unterschiedlichen Datensenke 20 adressiert sind, in die Transportstrompakete 12 des Transportstroms 14 gemultiplext sind, d.h. die zeitliche Veränderung der Zuordnung der seriell angeordneten Transportstrompakete 12 des Transportstroms 14 zu den einzelnen Datensenken 20 nicht zufällig, sondern nach einem vorbestimmten Muster geschieht, wie z.B. nach einem bestimmten Raten/Qualitätsoptimierungsverfahren oder dergleichen, so dass Transportstrompakete, die an eine bestimmte Datensenke adressiert sind, in dem Transportstrom 14 üblicherweise mit einem vorbestimmten zeitlichen Muster auftreten. Auf diese Weise könnten die Bestimmer 28 ausgebildet sein, um bei der Bestimmung des Wahrscheinlichkeitswerts für die jeweilige Datensenke 20 eine kürzer- und/oder längerfristige Zuweisungshäufigkeit vergangener Transportstrompakete 12 der jeweiligen Datensenke 20 zu berücksichtigen.

Der Effekt obiger Maßnahmen besteht nun also darin, dass die Bestimmer 28 für jede Datensenke 20 einen Wahrscheinlichkeitswert bereitstellen, die für den Zuweiser 30 erkennen lassen, zu welcher Datensenke 20 das aktuelle fehlerhafte Transportstrompaket 12 gerade gehört. Dieses aktuelle Transportstrompaket 12 muss also nicht verworfen werden, obwohl die Adressangabe 54 nicht als zuverlässig vorausgesetzt werden kann.

Die jeweilige Datensenke 20, die ihr Transportstrompaket 12 trotz Fehlerhaftigkeit erhält, kann dieses Transportstrompaket bzw. die entsprechenden Nutzdaten darin gewinnbringend verwenden, indem sie den Vorwärtsfehlerschutzcode 100 ausnutzt, der beispielsweise ein systematischer Vorwärtsfehlerschutzcode ist. Ist der Vorwärtsfehlerschutzcode 100 in dem Datenstrom 36 ein systematischer Vorwärtsfehlerschutzcode mit InterleaverFunktionalität, dann kann aufgrund des trotzdem zugewiesenen Transportstrompaketes die jeweilige Datensenke bzw. ihr Decodierer 21 die Interleaver-Tabelle 104 mit höherer Wahrscheinlichkeit vollständig ausfüllen, so dass die Decodierung des Datenstroms 38 an der jeweiligen Datensenke 20 durch den Decodierer 21 der jeweiligen Datensenke 20 mit höherer Wahrscheinlichkeit erfolgreich ist, weil die Fehlerkorrektur die Fehler in dem fehlerhaften Transportstrompaket ausmerzt.

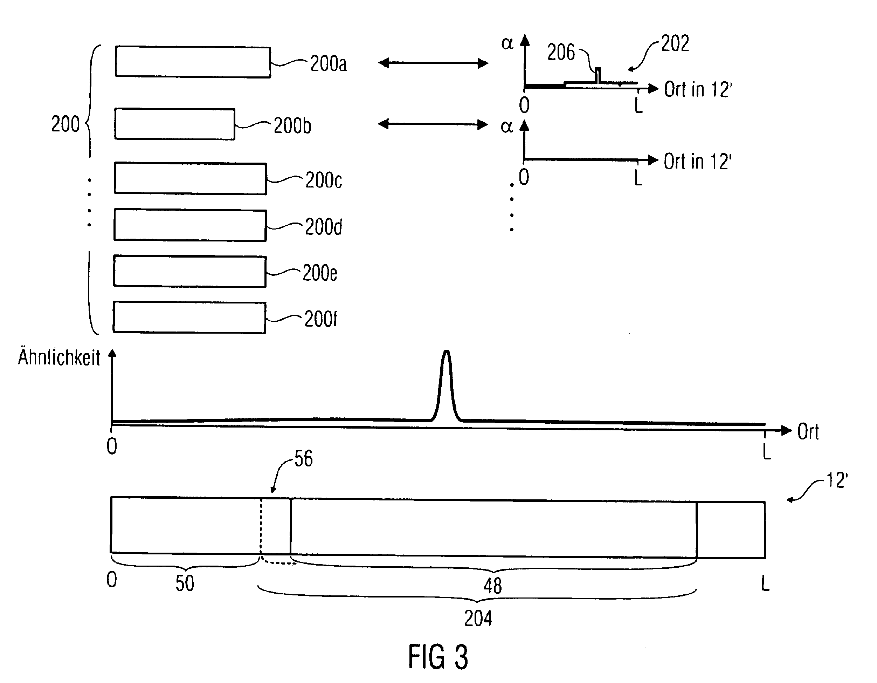

Bevor nun im Folgenden die Ausführungsbeispiele in verschiedenen Implementierungsmöglichkeiten, die im Vorhergehenden Bezug nehmend auf die Fig. 1 und 2 beschrieben worden sind, nachfolgend noch einmal anhand konkreterer Datenformate veranschaulicht werden, wird im Folgenden noch einmal Bezug nehmend auf Fig. 3 der Versuch unternommen, die Funktionalität der Wahrscheinlichkeitswertberechner 28 aus einer etwas anderen Warte aus zu beschreiben. In Fig. 3 ist das aktuelle Transportstrompaket mit 12' veranschaulicht, wie es einem exemplarischen Wahrscheinlichkeitswertberechner vorgelegt wird, dessen Funktionalität stellvertretend auch für die anderen Wahrscheinlichkeitswertberechner nun noch einmal etwas anders als im Vorhergehenden beschrieben erörtert wird. Fig. 3 zeigt den Zustand des Wahrscheinlichkeitswertberechners zu dem Zeitpunkt, bei dem das Transportstrompaket 12' von dem Zuweiser 30 mit der Frage vorgelegt wird, ob das als fehlerhaft angezeigte Transportstrompaket 12' zu der zugehörigen Datensenke 20 gehört oder nicht. Zu diesem Zeitpunkt besitzt der Wahrscheinlichkeitswertberechner 28 einen bestimmten Zustand, der sich unter anderem durch bestimmte Daten 200 auszeichnet, die sich zeitlich mehr oder weniger schnell ändern können. Der Zustand ist Datensenkenspezifisch, wie sich aus nachfolgender Erörterung ergeben wird; nur der Umgang mit den ansonsten datenspezifischen Daten kann datensenkenunspezifisch sein.

Zu den Daten gehören solche, wie z.B. 200a, 200b, die datensenkenunspezifisch sind, wie z.B. typische Werte für den Inhalt des Felds 84 (Fig. 2), aber auch solche, die für die jeweilige Datensenke spezifisch oder gar eindeutig sind, wie z.B. die Daten 200c und 200d, die beispielsweise dem Inhalt 82 bzw. 98 aus Fig. 2 für die jeweilige Datensenke entsprechen können und über eine größere Anzahl an Datenpaketen 90 bzw. 38 hinweg unverändert bleiben, und wiederum Daten 200e und 200f, die für bestimmte Felder des Transportstrompaketes 12' zu erwarten wären, wenn es sich bei dem Transportstrompaket 12' um ein Transportstrompaket für die jeweilige Datensenke mit einem erwarteten Inhalt in dem Nutzdatenabschnitt handelte, wie z.B. das Transportstrompaket für die jeweilige Datensenke mit einem fehlenden Teil des noch nicht abgeschlossenen zuletzt erhaltenen Datenpaketes dieser Datensenke, wie z.B. das Paket 38ₐ in Fig. 2, also Inhalte, die mitunter auch nicht mehr im Datenstrom auftauchen, weil Sie mehr oder weniger nur für ein bestimmtes Nachfolgedatenpaket zutreffen, sich somit quasi von Datenpaket zu Datenpaket ändern und somit nur bei vorhergehender Datenpaketverlustfreiheit der jeweiligen Datensenke zutreffen. Bezug nehmend auf den zuletzt genannten Fall könnte es sich bei den Daten 200e und 200f beispielsweise um einen erwarteten Inhalt der Zeigeinformation 56 in dem Header des Transportstrompaketes 12' handeln. Zu den Datensenkenspezifischen Daten 200a, 200b können auch solche gehören, die nicht in dem Nutzdatenabschnitt 48 enthalten sind, sondern in dem Header 50, wie z.B. der Identifizierer 54 selbst, denn es kann ja sein, dass ein anderer Abschnitt des Paketes 12' defekt ist und die Gleichheit des tatsächlichen Identifiziererinhalts 54 mit dem für die jeweilige Datensenke 20 erwarteten ergibt eine Erhöhung der Wahrscheinlichkeit, dass betroffenes Paket 12' zu dieser Datensenke 20 gehört.

Jedem dieser Daten 200a - 200f kann eine Auftrittswahrscheinlichkeitsverteilung 202 zugeordnet sein, wie sie exemplarisch in Fig. 3 für das Datum 200a angedeutet ist. Die Auftrittswahrscheinlichkeitsverteilung 202 gibt an, mit welcher Wahrscheinlichkeit das Datum 200a an allen möglichen Positionen über die Länge L des aktuellen Transportstrompaketes 12' hinweg zu erwarten ist. Die Auftrittswahrscheinlichkeitsverteilung 202 für ein Datum kann unveränderlich sein, wie z.B. für das Datum 200e, das den erwarteten Inhalt für die Zeigerinformation 56 beinhaltet, oder stellt ebenfalls einen Teil des zeitveränderlichen Zustands des Wahrscheinlichkeitswertberechners 28 dar. Eines der datensenkenunspezifischen Daten 200a und 200b kann sich beispielsweise bekannterweise lediglich in dem Nutzdatenabschnitt 48 aufhalten, und dann ist die Auftrittswahrscheinlichkeitsverteilung 202 für dieses Datum 200a nur binnen des möglichen Erstreckungsbereiches 204 des Nutzdatenabschnittes 48 ungleich Null. Ein erhöhter Peak 206 in dem Auftrittswahrscheinlichkeitsverteilungsverlauf 202 kann sich abhängig von dem aktuellen Zustand des Wahrscheinlichkeitswertberechners 28 ergeben, wie z.B. aus der erwarteten Sprunginformation 200e aufgrund der Längenangabe 80 des zuletzt nur bruchstückhaft erhaltenen Datenpaketes, welche Längenangabe beispielsweise auch eines der Daten 200 ausmacht. Es mag aber auch unveränderliche Auftrittswahrscheinlichkeitsverteilungen geben, wie z.B. für Daten 200, die erwartete Inhalte des Headers 50 betreffen. Dazu gehört beispielsweise die Sprunginformation 56 oder aber auch Informationen, die im vorhergehenden nicht erwähnt worden sind, aber auch vorhanden sein können, wie z.B. eine laufende Nummer in den Headern der einer bestimmten Datensenke zugeordneten Transportstrompakete. Eine solche laufende Nummer stellt eine Information von Transportstrompaketen dar, die sich in für die Datensenken spezifischer Art von jeweiliger Datensenke zugewiesenem Transportstrompakt zu jeweiliger Datensenke zugewiesenem Transportstrompakt ändert.

Je nach Auftrittswahrscheinlichkeitsverteilungsverlauf 202 kann nun der Wahrscheinlichkeitswertberechner 28 das Auftreten von Ähnlichkeiten zwischen dem Inhalt des aktuellen Transportstrompaketes 12' und den Daten 200 für alle Orte im Transportstrompaket 12' oder nur für spezielle Orte ermitteln. Für verschiedene oder alle der Daten 200 ergibt sich somit ein Ähnlichkeitswert für alle oder mehrere oder einen Ort innerhalb des aktuellen Transportstrompaketes 12', wobei in Fig. 3 exemplarisch die Ähnlichkeit als ein kontinuierlicher Verlauf über das Transportstrompaket 12' hinweg dargestellt ist. Als oben beschriebener Wahrscheinlichkeitsbeitragswert könnte nun beispielsweise ein Produkt des Ähnlichkeitswertes mit dem entsprechenden Auftrittswahrscheinlichkeitswert an einem bestimmten Ort, an dem die Ähnlichkeit ermittelt worden ist, verwendet werden. Dies wird für möglichst viele Daten 200 durchgeführt, wie es im Vorhergehenden beschrieben worden ist, und diese Beitragswerte können dann aufsummiert oder aber auch multipliziert werden, und zwar unter weiterer Gewichtung dieser Beiträge oder nicht.

Bei jeder Zuweisung eines Transportstrompaketes, sei es fehlerhaft oder nicht fehlerhaft gewesen, aktualisiert der Wahrscheinlichkeitswertbestimmer 28 seine Daten 200 und damit seinen Zustand sowie die zu seinem Zustand gehörigen Auftrittswahrscheinlichkeitsverteilungen.

Etwas verallgemeinert ausgedrückt, existiert also für jede Datensenke 20 ein Wahrscheinlichkeitswertbestimmer 28, und dieser Wahrscheinlichkeitswertbestimmer 28 besitzt jeweils einen eigenen datensenken-spezifischen Zustand, der jedes Mal dann anhand des Inhalts eines Transportstrompaketes aktualisiert wird, wenn ein solches der Datensenke zugewiesen wird. Die Zustände der unterschiedlichen Wahrscheinlichkeitswertberechner 28 unterscheiden sich also voneinander. Da diese Zustände dazu herangezogen werden, um durch Vergleich dieses Zustands mit dem Inhalt eines aktuell fraglichen, fehlerhaften Transportstrompaketes 12' zu bestimmen, wie wahrscheinlich selbiges zu der eigenen Datensenke 20 gehört, fallen die Wahrscheinlichkeitswerte der Bestimmer 28 unterschiedlich hoch aus, und der Zuweiser 30 kann die Datensenke mit der höchsten Wahrscheinlichkeit auswählen, vorausgesetzt beispielsweise, sie überschreitet - relative zu den anderen Wahrscheinlichkeitswerten oder absolut - eine gewisse Mindestschwelle.

Bezug nehmend auf Fig. 3 wird darauf hingewiesen, dass die Berechnung des Peaks 206 bzw. von dessen Position beispielsweise der Lokalisierung von Feldpositionen entspricht, wie sie bei der vorhergehenden Beschreibung erwähnt wurde. Dieses Aufsuchen bzw. Lokalisieren kann auf Grundlage der Zeigerinformation 56 oder durch Fortschreibung bzw. Prognose dessen, wo das neue Datenpaket in einem der nachfolgenden Transportstrompakete beginnen wird, stattfinden. So wurde es ja auch im vorhergehenden beschrieben. Die Ähnlichkeitsuntersuchung an der lokalisierten Stelle kann der Berechnung eines Bin einer entsprechenden Kreuzkorrelationsfunktion an der entsprechenden Offsetposition mit dem erwarteten Inhalt entsprechen oder aber einem anderen Ähnlichkeitsmaß an der lokalisierten Stelle zwischen dem defekten Transportstrompaket 12' einerseits und dem erwarteten Inhalt andererseits.

Obige Ausführungsbeispiele sollen nun noch einmal in anderen Worten erklärt im Zusammenhang mit konkreten Rundfunk-Verfahren erläutert werden. Dabei zeigen obige Ausführungsbeispiele eine Möglichkeit der fehlertoleranten Decodierung von eingekapselten Datenströmen bzw. ein Empfangsverfahren für eingekapselte, paketorientierte Datenströme mit unterscheidbaren Datensenken. Dabei wird es ermöglicht, fehlerhaft empfangene Pakete einzelnen Datensenken zuzuordnen, obwohl bzw. auch wenn die Einkapselierungsstruktur beschädigt ist. Implementierungen obiger Ausführungsbeispiele können unter anderem, aber nicht ausschließlich, progressive und hierarchische Fehlerschutzverfahren auf Ebene der unmittelbar involvierten und benachbarten Protokollschichten unterstützen.

Als Einkapselierungsverfahren können beispielhaft Multi-Protocol-Encapsulation (MPE) und Generic-Stream-Encapsulation (GSE) genannt werden, welche z.B. bei den Rundfunk-Verfahren DVB-H und DVB-SH einsetzbar sind.

Wie es oben beschrieben worden ist, kann ein heuristisches Vorhersagemodell über die Beschaffenheit von teilweise fehlerhaft übermittelten Datenpaketen verwendet werden, um diese auf Empfängerseite einer von mehreren in Frage kommenden Datensenken zur weiteren Decodierung zuzuordnen. Dabei können, wie es im Vorhergehenden beschrieben worden ist, verschiedene Erkenntnisse über die empfangenen Pakete zum Einsatz kommen: a priori Wissen, das aufgrund des gewählten Übertragungsstandards bekannt ist, Messung von Paket-Parametern, die bei einer Übertragung konstant oder stetig vorhersagbar sind. usw.

Wie es in Fig. 1 beschrieben worden ist, werden solche Parameter also für jede Datensenke von vorher empfangenen Paketen gesammelt und prädiziert. Für jedes weitere empfangene Paket kann auf diesen Kenntnissen basierend für jede Datensenke eine Annahmewahrscheinlichkeit berechnet werden, welche Berechnung von den vorher erwähnten Wahrscheinlichkeitswertberechnem 28 durchgeführt wird. Beschädigte Pakete 12 können dann der Datensenke 20 mit der höchsten Annahmewahrscheinlichkeit zugeordnet werden. Die Verwendung einer unteren Schranke kann verhindern, dass zu stark beschädigte Pakete angenommen werden.

Die Umsetzung obiger Ausführungsbeispiele bedeutet nur eine Erweiterung bekannter Übertragungsverfahren auf Empfängerseite. Die Kompatibilität mit dafür nicht vorbereiteten Empfangsgeräten bleibt unberührt. Anders ausgedrückt, müssen keine Veränderungen an den jeweiligen Standards vorgenommen werden. Ebenso muss keine Modifikation auf der Sendeseite erfolgen.

Mit anderen Worten ausgedrückt, beschrieben obige Ausführungsbeispiele eine Erweiterung für Empfangsverfahren für eingekapselte Datenströme auf Ebene der Transport- und Vermittlungsschicht. Ein Anwendungsfall aus diesem Bereich ist die Einkapselung von Netzwerkpaketen. Bei entsprechenden Verfahren werden die eingekapselten Datenpakete 90 anschließend in Transportpakete 12 fragmentiert. Da im Allgemeinen in einem Systemmultiplex mehrere Nutzdatenströme parallel eingekapselt übertragen werden, sind die Transportpakete 12 mit einer Identifikation versehen, die sie einem Datenstrom zuordnet.

Der Empfänger solcher Datenströme entscheidet im fehlerfreien Fall auf Basis dieser Identifikation 54, welchem Nutzdatenstrom er das angekommene Transportpaket zuordnet. Wurde dieses fehlerhaft empfangen oder zumindest das Identifikationsfeld beschädigt, muss das angekommene Transportpaket verworfen werden. Unter Umständen sind mehrere Folgepakete ebenfalls zu verwerfen, bis das Protokoll den Nutzdatenstrom wieder synchronisieren kann. In der Regel führen diese Umstände zu einem größeren Verlust an Nutzdaten,

Die intakte Rahmenzuordnung der Transportpakete 12 selbst bildet eine Voraussetzung zur Benutzung obiger Verfahren. Diese ist in der Regel bei Transportsystemen mit fester Paketlänge a-priori gegeben. Eine Sicht auf alle beteiligten Protokollschichten ist eine weitere Voraussetzung. Damit gehören obige Verfahren der Cross-Layer-Optimierung an.

Durch obige Verfahren werden nun zusätzlich auch fehlerhaft empfangene Transportpakete 12 den einzelnen Nutzdatensenken 20 zugeordnet. Damit wird verhindert, dass bei mehreren parallelen Datenströmen Senken 20 Daten versehentlich annehmen, die eigentlich nicht für sie bestimmt sind und somit auf einer falschen Datengrundlage arbeiten und korrigieren.

Dazu erfolgt eine Extraktion und Mitschreibung von Parametern der zugeordneten Nutzdatenpakete (vgl. Fig. 3). Diese Fortschreibung geschieht in jeder Datensenke individuell. Dabei sind solche Parameter von Interesse, die aus dem sequentiellen und zeitlichen Zusammenhang im Vorhinein eine gute Bekanntheit oder starke Vorhersagbarkeit aufweisen. Solche sind zum Beispiel Parameter, deren jeweiliger Wert im Standard fest vorgeschrieben ist. Eine starke Vorhersagbarkeit haben ebenso alle Parameter, die während einer Übertragung konstant sind oder einer stetigen Wertänderung unterliegen. Beispiele zur Auswahl solcher Parameter sind nachfolgend noch einmal aufgelistet.

Ein fehlerhaft empfangenes Paket 12 wird mit Hilfe einer sogenannten Annahmewahrscheinlichkeit in Beziehung zu einer Datensenke 20 gebracht. Diese Wahrscheinlichkeit berechnet die Senke bzw. der zugehörige Berechner 28 aus einer Menge gewichteter Regeln zur Bildung der Annahmewahrscheinlichkeit. Diese Regeln arbeiten auf dem aktuellen Mitschreibungszustand 200 der Datensenke 20 und der entsprechenden Parameter des noch nicht zugeordneten Pakets 12. Die Regeln haben dabei einen engen Bezug zu den bereits oben genannten Parametern; Beispiele werden noch mal bei der Auflistung dieser gegeben. Unter Beachtung aller Regeln ist jedem nicht zugeordneten Paket für jede Datensenke durch Mittelwertbildung mit Gewichtung eine Annahmewahrscheinlichkeit berechenbar. Diese Wahrscheinlichkeit kann im erweiterten Demultiplexer bzw. im Zuweiser 30 wahlweise direkt verwendet werden, um mit einer Maximumsbildung eine Entscheidung zu treffen. Alternativ können noch die Bildung eines gleitenden Mittelwerts oder ähnliche Filter vorgeschaltet werden. Der erweiterte Demultiplexer zeichnet sich durch folgende Elemente aus: Eine Fallunterscheidung für fehlerhaft empfangene Transportpakete 12 und, in diesem Fall, eine anschließende Bewertungsdurchführung für das Paket mit allen Senken 20. Das Resultat wird dann als alternative Entscheidung in den bisherigen Demultiplexer eingespeist.

Die Annahmewahrscheinlichkeit hängt unter anderem vom aktuellen Zustand der Datensenke 20 ab. Die Regeln an sich sind teilweise komplex. Sie stoßen Suchvorgänge innerhalb der zu analysierenden Transportstrompakete 12 an und justieren die mitgeschriebenen Parameter 200 im Falle einer erfolgreichen Suche nach bestimmten Mustern im Paket, die mit hoher Sicherheit auf einen Wiederaufsatzpunkt hinweisen. Ein Wiederaufsatzpunkt ist dabei ein aussagekräftiges und verifizierbares Muster einer höheren Protokollschicht 88 bzw. 68 im Datenstrom. Daneben existieren auch einfache Regeln, die bestimmte Werte an einer erwarteten Auftrittsstelle analysieren und direkt eine Bewertung liefern. Je nach aktuellem Zustand der Senke werden einzelne Regeln zur Optimierung des Rechenaufwands aktiviert oder deaktiviert.

Das veränderte Vorgehen des Demultiplexers im Fehlerfall (beim Empfang) ist wie folgt: Für das unzugeordnete Paket 12 wird bei jeder Datensenke 20 eine Annahmewahrscheinlichkeit gebildet. Das Paket wird anschließend der Datensenke 20 mit der höchsten Annahmewahrscheinlichkeit zugeordnet. Zusätzlich kann, wie oben beschrieben, vorher eine Filterung der Werte erfolgen. Die Datensenke 20 selbst behandelt das Paket entsprechend dem fehlerhaften Empfang weiter; dort angesiedelte Verfahren zur Fehlerprüfung bzw. - korrektur werden von dem senkeneigenen Decodierer 21 herangezogen, um das Paket zum Beispiel unter Vorbehalt zu verwerten oder vor einer weiteren Verwendung zu korrigieren.

Zusätzlich verhindert eine untere Schwelle zur Paketannahme, das Daten angenommen werden, die vom Empfang sehr stark gestörter Paketübertragung herrühren. Dieser Sachverhalte wird damit dadurch erkannt, dass alle Senken verhältnismäßig niedrige Akzeptanzwerte für ein solches Paket berechnen. Solche Pakete werden dann endgültig verworfen.

Es existiert bei obigen Verfahren ein Synergie-Effekt durch Kombination mit Vorwärtsfehlerschutzverfahren. Obige Verfahren ermöglichen die Verwendung von empfangenen Daten aus einem Multiplex zur weiteren Verarbeitung mit zusätzlichen und bereits nach den Standards bestehenden Vorwärtsfehlerschutzverfahren. Durch die Zuordnung zu einzelnen Senken 20 kann der Fehlerschutz der jeweiligen Senke 20 auch potentiell beschädigte Datenblöcke dennoch dediziert annehmen. Damit wird das Korrekturpotential des jeweiligen Fehlerschutzes erhöht.

Im Folgenden soll noch eine Ausführliche Erklärung am Beispiel des DVB-H Standards mit MPE erfolgen. Bei dem rundfunkbasierten IP-Datacast-Verfahren DVB-H kann das oben beschriebene Verfahren angewendet werden. Dabei erfolgt der Empfang von IP-Paketen 90 mittels MultiProtocol-Encapsulation (MPE). Im MPEG2-Transportstrom 14 sind die dafür bestimmten Daten auf einzelne Transportstrompakete 12 verteilt. Die Adressierung eines Transportstrompakets zu einer MPE-Senke 20 erfolgt im fehlerfreien Fall entsprechend des Standards durch den sog. "Packet-Identifier" (PID), vgl. 56.

Durch obige Verfahren werden auch fehlerhaft empfangene Transportstrompakete 12' den einzelnen Datensenken 20 zugeordnet. In Abbildung 1 ist der zugehörige Aufbau dargestellt worden. Jede Datensenke 20 und ihr Berechner 28 verwalten dabei die aktuellen Parameter zu ihrem Anteil des Transportstroms, d.h. dem ankommenden Strom von Paketen für eben diese Senke 20. Der Transportstrom-Demultiplexer 10 wird so erweitert, dass er bei Transportstrompaketen 12 mit gesetztem TEl-Flag (Transport Error Indicator), d.h. in dem Fall des Erkennens eines Fehlers durch Modul 22, die Auswahlkriterien nach dem neuen Verfahren verwendet: Jede Datensenke 20 bzw. ihre Berechner 28 wird bezüglich des vorliegenden Transportstrompakets nach ihrer Annahmewahrscheinlichkeit befragt. Der Senke 20 mit dem höchsten Rückgabewert wird das Paket zugestellt. Datensenken 20, die fehlerbehaftete Pakete nicht decodieren können, verwerfen diese bei Erhalt. Spezialisierte Datensenken ermöglichen jedoch auch bei fehlerbehafteten Paketen eine weitere Verarbeitung.

Im soeben beschriebenen Fall von DVB-H kann das neue Verfahren gemäß Fig. 1-3 die Vorwärtsfehlerkorrektur MPE-FEC (Multi-Protocol-Encapsulation Forward-Error-Correction) unterstützen. Das Verfahren ermöglicht somit die reale Umsetzung bei mehreren simultanen MPE-Datenströmen 36 bei Fehlerschutzimplementierungen die aggressiver als im Standard vorgesehen korrigieren, also z.B. progressive und hierarchische Verfahren.

Eine MPE-FEC-Datensenke 20 verwaltet jeweils einen sogenannten MPE-FEC-Rahmen, der Daten zur Korrektur durch den Fehlerschutz-Blockcode RS(255,191,64) (vgl. 100) zwischenspeichert. Bei der Kombination der oben beschriebenen Handhabung defekter Pakete 12' mit dem MPE-FECVorwärtsfehlerschutz kann die Datenstruktur zur Speicherung der Paketstromparameter an ähnlicher Stelle wie die des MPE-FEC-Rahmens und gegebenenfalls bei der gleichen Protokollinstanz angesiedelt werden.

Obige Ausführungsbeispiel sind aber auch direkt übertragbar auf u.a. und nicht ausschließlich andere Einkapselierungsverfahren wie MPE und MPE-IFEC (Inter-burst FEC) (DIGITAL VIDEO BROADCASTING PROJECT (DVB) (Hrsg.): *Digital Video Broadcasting (DVB); MPE-IFEG.* Digital Video Broadcasting Project (DVB), 11 2008. (DVB Bluebook *A131). http:*//*www*.dvb.org/) beim Rundfunk-Standard DVB-SH, die entsprechenden Verfahren anderer Rundfunkstandards wie ATSC (Standard ATSC A/53, Part 1; 8 2009. *ATSC Digital Television Standard: Part* 1 *Digital Television System.hitp:*//*www.*atsc. *Org*/*)* und andere, etc. Obwohl oben schon viele Beispiele geliefert wurden, sollen im Folgenden noch mal Regeln zur Bildung der Annahmewahrscheinlichkeit explizit aufgelistet werden.

Im Folgenden werden verschiedene für die Mitschreibung in interessante Parameter und entsprechende Regeln zur Verwertung der Parameter für die Zuordnung von Paketen zu Datensenken beschrieben. Alle Regeln können gemeinsam durch Gewichtung zur Bildung der Annahmewahrscheinlichkeit genutzt werden. Suchvorschriften in diesen Regeln werden je nach Aufwand dann eingesetzt, wenn die Senke intern einen Verlust der Synchronität erkannt hat. Diese Übersicht erhebt keinen Anspruch auf Vollständigkeit. Für eine Übersicht der entsprechenden Protokollschichten und Felder von DVB-H wird auf JAEKEL, Torsten: DVB-H Data Mapping. 052006. -DiBroC verwiesen.)

**Synchronität** wird von der Annahmewahrscheinlichkeit selbst oder der Häufigkeit der tatsächlichen Paketzuordnungen abgeleitet: Dabei werden die Mittelwerte von je einem kurzfristigen und einem langfristigen vergangenen Zeitfenster verglichen. Fällt der Kurzfristwert unter eine bestimmte Schwelle unterhalb des Langfristwerts, ist anzunehmen, dass die Senke die Synchronität verloren hat. Entsprechend aktiviert die Senke Suchvorschriften.

**Längenfelder** wie z.B. 80 und 96 können als Indiz für eine Datenposition zum Wiederaufsetzen benutzt werden. Sie geben Hinweise darauf, wo in einem der folgenden Transportstrompakete 12 ein neuer IP-Paketanfang zu suchen ist. Längenfelder existieren auf Ebene von MPE, (vgl. 68), IP (vgl. 88) und UDP. Alle hängen bei nicht fragmentierten IP-Paketen direkt voneinander ab und sind somit redundant. Diese Beziehung ist damit auch zur direkten Suche nach einem Wiederaufsatzpunkt zu benutzen

**Fragment-Offset,** wie z.B. 56, wird bei fragmentierten IP-Paketen benutzt, um zu signalisieren, dass ein Fortsetzungsteil eines IP-Pakets vorliegt. Ein zum vorhergehenden IP-Paket (vgl. 38a) passender Offset kann als Indiz für eine solche Fortsetzung genutzt werden.

**IP-Adressen,** wie z.B. 98 und 82, sind oft einem IP-Strom 86 bzw. einer MPE-Sitzung 68) eindeutig zuzuordnen. Damit folgt umgekehrt eine Zuordnung einer IP-Adresse 98 zu einer MPE-Senke 20. Es wird also ausgenutzt, dass eine Menge gleichbleibender IP-Adressen innerhalb einer MPESitzung verwendet wird. Das plötzliche Auftreten einer neuen Adresse ist im Bereich der Rundfunkausstrahlung eher selten bis nicht anzutreffen. Sowohl Ziel- als auch Quell-Adressen werden mit dieser Beziehung benutzt.

**UDP-Ports** unterliegen in der Regel den gleichen Bedingungen wie oben für IP-Adressen beschrieben ist.

**Selektoren** wie TOS (Type of Service), TTL (Time to Live), Protocol, Flags, Version sind pro Sitzung in der Regel konstant. Selektoren unterliegen dieser Bedingung eindeutiger als Adressen. Auch das Feld Header-Length verhält sich entsprechend, ist aber formal kein Selektor.

IP-Prüfsumme (z.B. 76) des Protokoll-Headers gibt Aufschluss über die Integrität des ProtokollHeaders. Diese Integritätsbeziehung wird zur Verifikation eines Wiederaufsatzpunktes verwendet. Die Suche nach einem möglichen IP-Paketbeginn in einem Transportstrompaket ist mit dieser Beziehung auch durch Ausprobieren möglich.

**Multicast-Adressen** schaffen einen Zusammenhang zwischen der MAC-Adresse des MPE-Headers und der IP-Zieladresse (DEERING, Stephen E.: Host Extensions for IPMulticasting. Internet Engineering Task Force, 8 1989. (RFC 1112). http://tools.ietf.org/html/rfc1112). Damit verhalten sie sich ähnlich wie die über mehrere Protokollebenen verteilten Längenfelder. Die Verwendung von Multicast-Adressen ist üblich bei IP-Datacast.

**PID** (vgl.54) ist eindeutig für jede Senke (20) und wird vom Demultiplexer für intakt empfangene Transportpakete benutzt um sie zuzuordnen. Auch bei einem fehlerhaft empfangenen Paket kann dieses Feld inspiziert werden. Falls die PID für die Senke korrekt ist, kann dies positiv bewertet werden.

**Continuity-Counter** zählt innerhalb des Paketstroms für eine PID kontinuierlich. Er kann wie das PID-Feld benutzt werden, um zur Berechnung der Annahmewahrscheinlichkeit beizutragen.

**Signalisierungs-Tabellen** (PSI/SI) werden regelmäßig im Transportstrom wiederholt übertragen. Dabei ändern sich die Inhalte der meisten Tabellen verhältnismäßig selten. Die Inhalte ankommender Transportpakete und die von bereits empfangenen Tabellen können miteinander verglichen werden, um abzuleiten, ob ein fragliches Transportpaket zu einer entsprechenden Datensenke für die Signalisierung zugeordnet werden muss. Dabei können auch Metriken zum Einsatz kommen, die auf Ähnlichkeit prüfen.

Encapsulierung bzw. Einkapselierung bezeichnet in diesem Dokument übrigens die Einkapselung von Datenströmen bestimmter Protokolle in ein anderes Protokoll zwecks Übertragung der ursprünglichen Datenströme über einen sonst nicht kompatiblen Datentransport als Transportweg.

Rundfunksysteme nach DVB-H (Standard ETSI EN 302 304; 11 2004. *Digital Video Broadcasting (DVB); Transmission System for Handheld Terminals (DVB-H). http:*//*TilWW*.etsi.*orgl,* Spezifikation ETSI TS 102585; 042008. *Digital Video Broadcasting (DVB); System Specifications for Satellite services to Handheld devices (SH) below* 3 *GHz.*http:*Ilwww.etsi.org*/*)* sind IP-basierte Systeme, die das Internetprotokoll zur Übertragung von beliebigen Medieninhalten (Radio, Fernsehen, Datendienste, Software, etc) nutzen. Mehrere Medieninhalte können dabei in einem DVB-H- bzw. DVB-SH-Multiplex zur eigentlichen Übertragung zusammengefasst werden. Dies geschieht durch Encapsulierung der IP-Datenströme nach dem Verfahren der Multi-ProtocolEncapsulation (MPE) (Standard ETSI EN 301 192; 04 2008. *Digital Video Broadcasting (DVB); DVB specification for data broadcasting.*http://www.etsi.*Org*/) welche ihrerseits wiederum auf die Paketübertragung von DVB (Standard ISO/IEC 13818-1; 12 2000. *Information technology -Generic coding of moving pictures and associated audio information: Systems. http:*//*www.*iso.Org/) aufbaut.

Bei Benutzung von IP-Datacast werden bei den oben genannten Verfahren (DVB-H und DVB-SH) IP-Pakete, die ihrerseits wiederum UDP-Pakete enthalten, per MPE übertragen. Dabei können die IP-Pakete an Multicast-Adressen versandt werden. Dies wird von (Standard ETSI EN 302 304; 11 2004. *Digital Video Broadcasting (DVB); Transmission System for Handheld Terminals (DVB-H).http:*//*TilWW.etsi.org*/*,* DIGITAL VIDEO BROADCASTING PROJECT (DVB) (Hrsg.): *IP Datacast over DVBH: Content Delivery Protocols (CDP).* Digital Video Broadcasting Project (DVB), 12 2005. (DVB Bluebook A101). *http:*//*www.*dvb.*Org*/*,* SCHULZRINNE, Henning; CASNER, Stephen L. ; FREDERICK, Ron; JACOBSON, Van: *RTP: A Transport Protocol for Real-Time Applications.* Internet Engineering Task Force, 7 2003. (RFC 3550). http://tools.ietf.org/html/rfc3550) konsequent vorgesehen.

Im Vergleich zu obigen Ausführungsbeispielen sind derzeitige Implementierungen für Demultiplexer eines MPEG2-Transportstroms nicht fehlertolerant ausgeführt. Die Zuordnung zu einer Paketsenke erfolgt ausschließlich auf Basis des PID-Feldes eines Transportpakets. Pakete mit gesetztem Fehlerindikator (TE1) werden verworfen. Eine detaillierte Erklärung des Transportstroms wird in (Standard ISO/IEC 13818-1; 12 2000. *Information technology -Generic coding of moving pictures and associated audio information: Systems. http:*//*www.*iso.*Org*/*)* gegeben.

Bei DVB-H und DVB-SH werden aufbauend auf MPE die Fehlerschutzverfahren MPE-FEC und MPE-IFEC eingeführt. Neben der unveränderten Übertragung der Nutzdaten können hierdurch optional Fehlerschutzinformationen unter Zuhilfenahme systematischer Fehlerkorrekturcodes mitgesendet werden. Derzeit kann bei DVB-H das Verfahren MPE-FEC mit dem Reed-Solomon-Code RS(255, 191,64) eingesetzt werden, das eine Verbesse-2 rung des Fehlerschutzes innerhalb eines Zeitschlitzes erlaubt. Bei DVBSH kann alternativ MPE-IFEC mit demselben Reed-Solomon-Code eingesetzt werden. Dieses Verfahren erlaubt einen Fehlerschutz, der mehrere Timeslice-Bursts überspannt.

Die im Standard und den Implementation-Guidelines (DIGITAL VIDEO BROADCASTING PROJECT (DVB) (Hrsg.): *DVB-H Implementation Guidelines.* Digital Video Broadcasting Project (DVB), 05 2007. (DVB Bluebook A092r2). http://www.dvb. Org/, Spezifikation ETSI TS 102 584; 2010. *Digital Video Broadcasting (DVB);DVB-SH Implementation Guidelines Issue* 2. *http:*//*www.dvb.org*/*)* vorgeschlagenen und oft umgesetzten Algorithmen zur Decodierung dieser Fehlerschutzmechanismen decken nur eine grundlegende Funktionalität ab, die sich ausschließlich auf die Netzzugangsschicht selbst bezieht und zugunsten von Ressourcensparsamkeit auf dem Zielsystem nicht alle Möglichkeiten des Fehlerschutzes ausnutzt.

So führt eine fehlerhaft empfangene Transportstrom-Sektion zur Markierung aller von dieser bedeckten Tabellenspalten als fehlerhaft. Ebenso resultiert auch ein Übertragungsfehler, der nur ein Transportstrom-Paket darin betrifft, zur Auslöschung der gesamten Transportstrom-Sektion und wiederum aller davon berührter Spalten.

Neben der oben genannten Implementierungsvariante existieren Vorschläge zur progressiven Rekonstruktion der Empfangsdaten, die MPE-FEC auch in den Fällen anwenden, bei denen eine CRC-Prüfung auf Ebene der Transportstrom-Sektionen fehlschlägt (KOPPEL-AAR, A. G. C. ; EERENBERG, O. ; TOLHUIZEN, L. M. G. M. ; AUE, V.: Restoration of IP-datagrams in the DVB-H link-layer for TV on mobile. In: Proc. Digest of Technical Papers. International Conference on Consumer Electronics ICCE '06, 2006, S. 409-410). Weitere Vorschläge (PAAVOLA, J. ; HIMMANEN, H. ; JOKELA, T. ; POIKONEN, J. ; IPATOV, V.: The Performance Analysis of MPE-FEC Decoding Methods at the DVB-H Link Layer for Efficient IP Packet Retrieval. In: IEEE Transactions on Broadcasting 53 (2007),3, S. 263-275. *http:*//*dx.doLorg*/*10.1109*/*TBC.2007.891694.* -DOI 10.1109/TBC.2007.891694) umfassen eine hierarchische Decodierung der übertragenen Daten. Diese baut auf den progressiven Verfahren auf. Bei der Decapsulierung wird pro Gruppe von empfangenen Symbolen (Transportstrom-Sektion, Transportstrom-Paket) unterschieden, ob die enthaltenen Symbole richtig, unsicher oder nicht empfangen wurden.

Diese Verfahren ziehen typischerweise Informationen aus der Sicherungsschicht (MPEG2-TS), wie etwa das TEI-Feld, hinzu, um genauere Aussagen über die Lage der fehlerhaften Symbole zu treffen.

Um die fehlerhaft empfangenen Transportpakete zuzuordnen werden in den oben genannten Vorschlägen beispielsweise deren Felder Continuity-Counter und PID hergenommen. Dies stellt einen grundsätzlich möglichen aber lediglich pragmatischen Ansatz dar. Obige Ausführungsbeispiele beschreiben deshalb ein wesentlich verfeinertes, akkurates und damit weiterführendes Handling zur Zuordnung fehlerhaft empfangener Pakete.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Abkürzungsverzeichnis

- DVB: Digitial Video Broadcasting, Standard-Familie zur Übertragung von Rundfunkinhalten
- DVB-H DVB: for Handheld, DVB-Systemstandard für terrestrische Übertragung zu mobilen Endgeräten.
- DVB-SH DVB: for Satellite Handheld, DVB-Systemstandard für satellitengestützte und hybride (sat./terr.) Übertragung zu mobilen Endgeräten.
- FEC: Forward Error Correction, Vorwärtsfehlerschutz
- IP: Internet Protocol, das Vermittlungsschicht-Protokoll des Internet
- IPDC: Internet Protocol Datacast, Übertragung von zumeist multimedialen Datenströmen unter Zuhilfenahme von Internet-Protokollen
- MAC: Medium Access Control, hier die Adressierungsebene von Ethernet
- MPE: Multi-Protocol Encapsulation
- MPE-FEC: Standardisierter Fehlerschutz bei DVB-H auf Basis von MPE mit einem Reed-Solomon FEC
- MPE-IFEC: MPE-Inter-burst-FEC, standardisierter Fehlerschutz bei DVB-SH auf Basis von MPE mit einem Reed-Solomon FEC (alternativ Raptor-Code) mit zusätzlichen Interleaving auf der Fehlerschutzebene über mehrere Bursts verteilt
- MPEG2-TS: Motion Picture Experts Group Transport Stream, Transportstrom gemäß ISO/IEC 13818-1 also die Abfolge der gesendeten TSP, auch bezeichnet als MPEG-TS
- Multicast: Versand einer Internet-Nachricht an mehrere Empfänger; im Gegensatz zum Broadcast wird dabei die Nachricht nur an Netze weitergegeben, in denen sich Empfänger für diese Nachricht befinden.
- PID: Packet Identifier, Dienstadresse auf Ebene des MPEG2-TS. Ordnet auf Empfängerseite ein TSP einer dafür bestimmten Senke zu, die dieses Paket weiter auswertet.
- PSI/SI: Program Specific Information/Service Information, Zusatzdaten zur Signalisierung bei DVB
- RS: Reed-Solomon Blockcode, systematischer Vorwärtsfehlerschutzcode
- TEI: Transport Error Indicator, Bitschalter, in dem die physikalische Übertragungsschicht auf Empfängerseite einträgt, ob dieses TSP fehlerhaft ist.
- TOS: Type of Service, Feld des IP-Headers
- TSP: MPEG-2 Transportstrom Paket
- TTL: Time To Live, Feld des IP-Headers
- UDP: User Datagram Protocol, Teil des Internet-Protokolls zur paketorientierten Da Denübertragung (Transportschicht)

## Patentansprüche

1. Vorrichtung zum Demultiplexen eines paketbasierten Transportstroms (14) aus jeweils mit einem systematischen Vorwärtsfehlererkennungscode versehenen Transportstrompaketen (12), wobei die Transportstrompakete jeweils einer aus einer Mehrzahl von Datensenken (20) zugeordnet sind, so dass in einen Nutzdatenabschnitt der Transportstrompakete, die einer gleichen Datensenke (20) zugeordnet sind, ein Datenstrom (36) aus Vorwärtsfehlerschutz-Code-geschützten Datenpaketez (38) eingebettet ist, der an die jeweilige Datensenke (20) adressiert ist, wobei die Vorrichtung ausgebildet ist, um
für ein vorbestimmtes Transportstrompaket (12), das gemäß dem systematischen Vorwärtsfehlererkennungscode fehlerhaft ist, für jede der Mehrzahl von Datensenken einen Wahrscheinlichkeitswert zu bestimmen, der angibt, wie wahrscheinlich das vorbestimmte Transportstrompaket (12) der jeweiligen Datensenke (20) zugeordnet ist, und
das vorbestimmte Transportstrompaket auf Basis der Wahrscheinlichkeitswerte für die Mehrzahl von Datensenken einer ausgewählten der Mehrzahl von Datensenken zuzuweisen.

2. Vorrichtung gemäß Anspruch 1, wobei für jede Datensenke die Bestimmung des Wahrscheinlichkeitswerts auf Basis von Informationen des vorbestimmten Transportstrompakets durchgeführt wird, die für die Datensenke spezifisch sind, oder sich in für die Datensenken spezifischer Art von jeweiliger Datensenke zugewiesenem Transportstrompakt zu jeweiliger Datensenke zugewiesenem Transportstrompakt ändern.

3. Vorrichtung gemäß Anspruch 1 oder 2, wobei für jede Datensenke die Bestimmung des Wahrscheinlichkeitswerts auf Basis einer Analyse eines Zeitmultiplexes vorheriger Transportstrompakete durchgeführt wird.

4. Vorrichtung gemäß einem der Ansprüche 1 bis 3, wobei für jede Datensenke die Bestimmung des Wahrscheinlichkeitswerts auf Basis von Informationen des Nutzdatenabschnitts des vorbestimmten Transportstrompakets durchgeführt wird.

5. Vorrichtung gemäß einem der Ansprüche 1 bis 4, wobei für jede Datensenke der Datenstrom, der an die jeweilige Datensenke adressiert ist, in die Nutzdatenabschnitte (48) der Transportstrompakete (12), die der jeweiligen Datensenke zugeordnet sind, per Fragmentierung eingebettet ist, wobei die Transportstrompakete (12a), in die ein Anfang (60) eines der Datenpakete (38b) fällt, jeweils eine Zeigerinformation (56) aufweisen, die anzeigt, wo in dem Nutzdatenabschnitt (48) des jeweiligen Transportstrompaketes (12a) der Anfang (60) des jeweiligen Datenpakets (38b) fällt, wobei die Vorrichtung ausgebildet ist, um
für jede Datensenke (20) einen ersten Abschnitt (56) des vorbestimmten Transportstrompakets (12) in einer für alle Datensenken (20) oder für die jeweilige Datensenke (20) konstanten Weise oder abhängig von bereits vorher zu der jeweiligen Datensenke (20) zugewiesenen Transportstrompaketen (12) zu lokalisieren,
einen zweiten Abschnitt (62) des vorbestimmten Transportstrompakets (12) abhängig von einem Inhalt des vorbestimmten Transportstrompakets (12a) an dem ersten Abschnitt so, als handele es sich bei dem Inhalt des vorbestimmten Transportstrompakets (12) in dem ersten Abschnitt um eine Zeigerinformation (56), zu lokalisieren,
den zweiten Abschnitt (62) daraufhin zu analysieren, ob es sich um den Anfang eines der jeweiligen Datensenke (20) zugeordneten Datenpakets (38) handeln kann, und
abhängig von einem Ergebnis der Analyse, den Wahrscheinlichkeitswert für die jeweilige Datensenke zu bestimmen.

6. Vorrichtung gemäß Anspruch 5, bei der die Vorrichtung ausgebildet ist, um für jede Datensenke in der Analyse, ob es sich um den Anfang eines der jeweiligen Datensenke zugeordneten Datenpaket handeln kann, zu überprüfen,
ob ein erstes Feld (110; 82, 98) in dem zweiten Abschnitt (62) mit Informationen übereinstimmt, die für die jeweilige Datensenke (20) seit zumindest der letzten Zuweisung eines Transportstrompakets (12) zu der jeweiligen Datensenke (20) konstant ist,
ob ein zweites Feld (116) in dem zweiten Abschnitt zu einem dritten Feld (118) in dem zweiten Abschnitt eine vorbestimmte Beziehung aufweist, wie sie für redundante Angaben in Einkapselungsdaten und Headerdaten (74) der der jeweiligen Datensenke zugeordnete Datenpakete (38) zutrifft, und/oder
ob ein viertes Feld (112) in dem zweiten Abschnitt zu einem fünften Feld (114) in dem zweiten Abschnitt eine vorbestimmte systematischer-Vorwärtsfehlererkennungs-Code-Beziehung aufweist.

7. Vorrichtung gemäß Anspruch 5 oder 6, wobei die Transportstrompakete (12b), in die kein Anfang eines der Datenpakete (38) fällt, die der jeweiligen Datensenke (20) zugeordnet sind, keine Zeigerinformation (56) aufweisen, so dass der Nutzdatenabschnitt (48) der Transportstrompakete (12b), in die kein Anfang eines der Datenpakete fällt, gegenüber dem Nutzdatenabschnitt (48) der Transportstrompakete (12a), in die ein Anfang (60) eines der Datenpakete fällt, um ein Ausbleiben der Zeigerinformation vergrößert ist, wobei die Vorrichtung ausgebildet ist, um
für jede Datensenke, der zuletzt ein Transportstrompaket (12) zugewiesen wurde, in dem sich ein der jeweiligen Datensenke (20) zugewiesenes Datenpaket (38) mit einer Längenangabe (80) befand, aus der hervorgeht, dass sich selbiges Datenpaket über das zuletzt der jeweiligen Datensenke (20) zugewiesene Transportstrompaket hinaus erstreckt, abhängig von der Längenangabe (80) einen dritten Abschnitt (120) an einem Anfang des Nutzdatenabschnitts (48) des vorbestimmten TransportstromPaketes zu lokalisieren,
den dritten Abschnitt (120) daraufhin zu analysieren, ob es sich um eine Fortsetzung desselbigen Datenpaketes handeln kann, und
abhängig von einem Ergebnis der Analyse den Wahrscheinlichkeitswert für die jeweilige Datensenke zu bestimmen.

8. Vorrichtung gemäß einem der Ansprüche 1 bis 7, bei der die Vorrichtung ausgebildet ist, um für jede Datensenke den Wahrscheinlichkeitswert abhängig davon zu bestimmen, ob
ob ein beliebiges Feld in dem vorbestimmten Transportstrompaket (12) mit Informationen übereinstimmt, die für die jeweilige Datensenke (20) seit zumindest der letzten Zuweisung eines Transportstrompakets zu der jeweiligen Datensenke konstant ist,
ob ein erstes beliebiges Paar von Feldern in dem vorbestimmten Transportstrompaket, die untereinander eine erste vorbestimmte Lagebeziehung zueinander aufweisen, eine vorbestimmte inhaltliche Beziehung zueinander aufweisen, wie sie für redundante Angaben in Einkapselungsdaten und Headerdaten der der jeweiligen Datensenke zugeordnete Datenpakete zutrifft, und/oder
ob ein erstes beliebiges Paar von Feldern in dem vorbestimmten Transportstrompaket, die untereinander eine zweite vorbestimmte Lagebeziehung zueinander aufweisen, eine vorbestimmte systematischer-Vorwärtsfehlererkennungs-Code-Beziehung zueinander aufweisen.

9. Vorrichtung gemäß einem der Ansprüche 1 bis 8, wobei für jede Datensenke (20) die Datenpakete (38) des Datenstroms (36), der an die zumindest eine Datensenke (20) adressiert ist, in die Nutzdatenabschnitte (48) der Transportstrom-Pakete (12), die der jeweiligen Datensenke (20) zugeordnet sind, per Fragmentierung eingebettet sind, und jedes Datenpaket (38) des an die jeweilige Datensenke (20) adressierten Datenstroms (36) ein Längenfeld (80) mit einer Längenangabe aufweist, die eine Länge des jeweiligen Datenpakets (38) angibt, und die Transportstrompakete (12) eine Zeigerinformation (56) aufweisen, die anzeigt, wo in den Nutzdatenabschnitten (48) der Transportstrompakete (12) die Anfänge (60) der Datenpakete (12) liegen, wobei die Vorrichtung ausgebildet ist, um
für jede Datensenke den Wahrscheinlichkeitswert für die jeweilige Datensenke auf Basis eines Vergleichs der Längenangabe eines letzten in einem der bereits der jeweiligen Datensenke zugewiesenen Transportstrompakete begonnenen Datenpakets und der Zeigerinformation des vorbestimmten Transportstrompakets zu bestimmen.

10. Vorrichtung gemäß einem der vorhergehenden Ansprüche, wobei für jede Datensenke (20) die Datenpakete (38) des Datenstroms (36), der der jeweiligen Datensenke (20) zugeordnet ist, jeweils zumindest eine Datensenken-bezogene Angabe (82, 98) aufweisen, wobei die Vorrichtung ausgebildet ist, um
für jede Datensenke einen oder mehrere potentielle Orte in dem vorbestimmten Transportstrompaket (12) zu bestimmen, an dem bzw. denen sich eine Datensenken-bezogene Angabe befinden könnte, und
den Wahrscheinlichkeitswert für die jeweilige Datensenke durch Vergleich eines Inhalts des vorbestimmten Transportstrom-Pakets an dem oder den potenziellen Orten mit einem zumindest seit einer letzten Zuweisung eines Transportstrompakets zu der jeweiligen Datensenke konstanten Datensenken-bezogenen Zustandswerts der jeweiligen Datensenke zu bestimmen.

11. Vorrichtung gemäß einem der Ansprüche 1-10, wobei die Vorrichtung ausgebildet ist, um
für jede Datensenke unter den bereits vorher der jeweiligen Datensenke zugewiesenen Transportstrompaketen einen intermittierend wiederkehrenden identischen Inhalt festzustellen, und
für jede Datensenke den Wahrscheinlichkeitswert für die jeweilige Datensenke durch Vergleich eines Inhalts des Nutzdatenabschnitts (48) des vorbestimmten Transportstrom-Pakets (12) mit dem intermittierend wiederkehrenden identischen Inhalt zu bestimmen.

12. Vorrichtung gemäß einem der vorhergehenden Ansprüche, wobei für jede Datensenke der Datenstrom (86), der an die jeweilige Datensenke (20) adressiert ist, in eine Einkapselierungsstruktur eingekapselt und zusammen mit Einkapselungsdaten (74) der Einkapselierungsstruktur in die Transportstrompakete (12) fragmentiert ist, die der jeweiligen Datensenke (20) zugeordnet sind, wobei die Vorrichtung ausgebildet ist, um
für die jeweilige Datensenke mehrere potenzielle Orte (116, 118) in dem Transportstrompaket (12) zu bestimmen, an denen sich zueinander eine vorbestimmte Beziehung aufweisende Inhalte der Einkapselierungsdaten und der Datenpakete des Datenstroms, der an die jeweilige Datensenke adressiert ist, befinden könnten, und den Wahrscheinlichkeitswert für die jeweilige Datensenke auf Basis davon zu bestimmen, ob zwischen Inhalten des vorbestimmten Transportstrompakets (12) an den bestimmten mehreren potenziellen Orten (116, 118) die vorbestimmte Beziehung besteht oder nicht, oder
einen oder mehrere potenzielle Orte in dem vorbestimmten Transportstrom-Paket (12) zu bestimmen, an dem oder denen sich ein Inhalt der Datenpakete (38) des Datenstroms (36), der an die jeweilige Datensenke (20) adressiert ist, befinden könnte, der zu einem Inhalt der Einkapselierungsdaten in einem der bereits vorher der jeweiligen Datensenke (20) zugewiesenen Transportstrompakete (12) die vorbestimmte Beziehung aufweist, und den Wahrscheinlichkeitswert auf Basis davon zu bestimmen, ob zwischen Inhalten des vorbestimmten Transportstrompakets an dem einen oder den mehreren potenziellen Orten und der Einkapselierungsdaten in den bereits vorher der jeweiligen Datensenke zugewiesenen Transportstrompakete (12) die vorbestimmte Beziehung besteht oder nicht.

13. Vorrichtung gemäß einem der vorhergehenden Ansprüche, wobei die Vorrichtung ausgebildet ist, um Transportstrompakete (10), die gemäß dem systematischen Vorwärtsfehlererkennungscode fehlerfrei sind, anhand einer Identifikationsangabe (54) des jeweiligen fehlerfreien Transportstrompakets, die die demselben zugeordnete Datensenke (20) identifiziert, der identifizierten Datensenke zuzuweisen.

14. Vorrichtung gemäß einem der vorhergehenden Ansprüche, bei der die Vorrichtung ausgebildet ist, um bei der Bestimmung des Wahrscheinlichkeitswerts für jede Datensenke (20) eine kürzer- und/oder längerfristige Zuweisungshäufigkeit vergangener Transportstrompakete (12) zu berücksichtigen.

15. Vorrichtung gemäß einem der vorhergehenden Ansprüche, bei der die Vorrichtung ausgebildet ist, um das vorbestimmte Transportstrompaket (12) auf Basis der Wahrscheinlichkeitswerte für die Mehrzahl von Datensenken (20) der Datensenke mit dem höchsten Wahrscheinlichkeitswert zuzuweisen.

16. System zum Decodieren eines Datenstroms, der an eine vorbestimmte Datensenke adressiert ist, aus einem paketbasierten Transportstrom aus jeweils mit einem systematischen Vorwärtsfehlererkennungscode versehenen Transportstrompaketen, mit
einer Vorrichtung gemäß einem der vorhergehenden Ansprüche; und
einem Decodierer zum Decodieren des Datenstroms, der in die Nutzdatenabschnitte der der vorbestimmten Datensenke durch die Vorrichtung zugewiesenen Transportstrompakete eingebettet ist.

17. Verfahren zum Demultiplexen eines paketbasierten Transportstroms (14) aus jeweils mit einem systematischen Vorwärtsfehlererkennungscode versehenen Transportstrompaketen (12), wobei die Transportstrompakete jeweils einer aus einer Mehrzahl von Datensenken (20) zugeordnet sind, so dass in einen Nutzdatenabschnitt der Transportstrompakete, die einer gleichen Datensenke (20) zugeordnet sind, ein Datenstrom (36) aus Vorwärtsfehlerschutz-Code-geschützten Datenpaketen (38) eingebettet ist, der an die jeweilige Datensenke (20) adressiert ist, wobei das Verfahren folgendes umfasst
für ein vorbestimmtes Transportstrompaket (12), das gemäß dem systematischen Vorwärtsfehlererkennungscode fehlerhaft ist, bestimmen eines Wahrscheinlichkeitswerts für jede der Mehrzahl von Datensenken, der angibt, wie wahrscheinlich das vorbestimmte Transportstrompaket (12) der jeweiligen Datensenke (20) zugeordnet ist, und
zuweisen des vorbestimmten Transportstrompakets zu einer ausgewählten der Mehrzahl von Datensenken auf Basis der Wahrscheinlichkeitswerte für die Mehrzahl von Datensenken.

18. Computerprogramm mit einem Programmcode zur Durchführung des Verfahrens nach Anspruch 17, wenn das Programm auf einem Computer abläuft.

## Claims

1. Apparatus for demultiplexing a packet-based transport stream (14) of transport stream packets (12) respectively provided with a systematic forward error detection code, the transport stream packets each being allocated to one of a plurality of data sinks (20), such that a data stream (36) of forward error protection code protected data packets (38), which is addressed to the respective data sink (20), is embedded in a payload data portion of the transport stream packets allocated to the same data sink (20), wherein the apparatus is implemented
to determine, for a predetermined transport stream packet (12) that it is erroneous according to the systematic forward error detection code, for each of the plurality of data sinks, a probability value indicating how probably the predetermined transport stream packet (12) is allocated to the respective data sink (20), and
to allocate the predetermined transport stream packet to a selected one of the plurality of data sinks based on the probability values for the plurality of data sinks.

2. Apparatus according to claim 1, wherein, for each data sink, the determination of the probability value is performed based on information of the predetermined transport stream packets that is specific for the data sink, or that changes in a data sink-specific manner from transport stream packet allocated to respective data sink to transport stream packet allocated to respective data sink.

3. Apparatus according to claim 1 or 2, wherein, for each data sink, the determination of the probability value is performed based on an analysis of a time multiplex of previous transport stream packets.

4. Apparatus according to one of claims 1 to 3, wherein, for each data sink, the determination of the probability value is performed based on information of the payload data portion of the predetermined transport stream packet.

5. Apparatus according to one of claims 1 to 4, wherein, for each data sink, the data stream addressed to the respective data sink is embedded by fragmentation into the payload data portions (48) of the transport stream packets (12) allocated to the respective data sink, wherein the transport stream packets (12a) containing a start (60) of one of the data packets (38b) each comprise pointer information (56) indicating where in the payload data portion (48) of the respective transport stream packet (12a) the start (60) of the respective data packet (38b) is contained, wherein the apparatus is implemented
to localize, for each data sink (20), a first portion (56) of the predetermined transport stream packets (12) in a manner constant for all data sinks (20) of the respective data sink (20), or in dependence on transport stream packets (12) already previously allocated to the respective data sinks (20),
to localize a second portion of the predetermined transport stream packet (12) in dependence on a content of the predetermined transport stream packet (12a) at the first portion as if the content of the predetermined transport stream packet (12) in the first portion were pointer information (56),
to analyze the second portion (62) as to whether the same can be a start of a data packet (38) allocated to the respective data sink (20), and
to determine the probability value for the respective data sink in dependence on a result of the analysis.

6. Apparatus according to claim 5, wherein the apparatus is implemented to examine in the analysis, for each data sink, whether the same can be the start of a data packet allocated to the respective data sink,
whether a first field (110; 82, 98) in the second portion (62) matches information that is constant for the respective data sink (20) at least since the last allocation of a transport stream packet (12) to the respective data sink (20),
whether a second field (116) in the second portion has a predetermined relationship to a third field (118) in the second portion, as it applies to redundant specifications in encapsulation data and header data (74) of the data packets (38) allocated to the respective data sink, and/or
whether a fourth field (112) in the second portion has a predetermined systematic forward error detection code relationship to a fifth field (114) in the second portion.

7. Apparatus according to claims 5 or 6, wherein the transport stream packets (12b) containing no start of one of the data packets (38) allocated to the respective data sink (20) comprise no pointer information (56), such that the payload data portion (48) of the transport stream packets (12b) containing no start of one of the data packets is enlarged by an absence of the pointer information with respect to the payload data portion (40a) of the transport stream packets (12a) containing a start (60) of one of the data packets, wherein the apparatus is implemented
to localize, for each data sink to which a transport stream packet (12) has been allocated last, which contained a data packet (38) allocated to the respective data sink (20), having a length specification (80) from which follows that the same data packet extends beyond the transport stream packet allocated last to the respective data sink (20), in dependence on the length specification (80), a third portion (120) at a start of the payload data portion (48) of the predetermined transport stream packet,
to analyze the third portion (120) as to whether the same can be a continuation of the same data packet, and
to determine the probability value for the respective data sink in dependence on the result of the analysis.

8. Apparatus according to one of claims 1 to 7, wherein the apparatus is implemented to determine, for each data sink, the probability value in dependence on
whether any field in the predetermined transport stream packet (12) matches information that is constant for the respective data sink (20), at least since the last allocation of a transport stream packet to the respective data sink,
whether a first arbitrary pair of fields in the predetermined transport stream packet having a first predetermined position relationship to each other, have a predetermined relationship to each other with regard to content, as it applies to redundant specifications in encapsulation data and header data of the data packets allocated to the respective data sink and/or
whether a first arbitrary pair of fields in the predetermined transport stream packet having a second predetermined position relationship to each other comprise a predetermined systematic forward error detection code relationship to each other.

9. Apparatus according to one of claims 1 to 8, wherein, for each data sink (20), the data packets (38) of the data stream (36) addressed to the at least one data sink (20), into which payload data portions (48) of the transport stream packets (12) allocated to the respective data sink (20) are embedded by fragmentation, and each data packet (38) of the data stream (36) addressed to the respective data sink (20) comprises a length field (80) having a length specification indicating a length of the respective data packet (38), and the transport stream packets (12) comprise pointer information (56) indicating where in the payload data portions (48) of the transport stream packets (12) the starts (60) of the data packets (12) are, wherein the apparatus is implemented
to determine, for each data sink, the probability value for the respective data sink based on a comparison of the length specification of a last data packet started in a transport stream packet already allocated to the respective data sink and the pointer information of the predetermined transport stream packet.

10. Apparatus according to one of the previous claims, wherein, for each data sink (20), the data packets (38) of the data stream (36) allocated to the respective data sink (20) each comprise at least one data sink-related specification (82, 98), the apparatus being implemented
to determine, for each data sink, one or several potential locations in the predetermined transport stream packet (12) where a data sink-related specification could be, and
to determine the probability value for the respective data sink by comparing content of the predetermined transport stream packet at the potential location(s) with a data sink-related state value of the respective data sink that is constant at least since a last allocation of a transport stream packet to the respective data sink.

11. Apparatus according to one of claims 1 to 10, wherein the apparatus is implemented
to establish, for each data sink, among the transport stream packets already previously allocated to the respective data sink, intermittently recurring identical content, and
to determine, for each data sink, the probability value for the respective data sink by comparing content of the payload data portion (48) of the predetermined transport stream packet (12) with the intermittently recurring identical content.

12. Apparatus according to one of the previous claims, wherein, for each data sink, the data stream (86) addressed to the respective data sink (20) is encapsulated in an encapsulation structure and fragmented, together with the encapsulation data (74) of the encapsulation structure, into the transport stream packets (12) allocated to the respective data sink (20), wherein the apparatus is implemented
to determine, for the respective data sink, several potential locations (116, 118) in the transport stream packet (12), where content of the encapsulation data and the data packet of the data stream addressed to the respective data sink having a predetermined relationship to one another could be, and to determine the probability value for the respective data sink based on whether the predetermined relationship between contents of the predetermined transport stream packet (12) at the specific several potential locations (116, 118) exists or not, or
to determine one or several potential locations in the predetermined transport stream packet (12) where content of the data packets (38) of the data stream (36) addressed to the respective data sink (20) could be, which has the predetermined relationship to content of the encapsulation data in one of the transport stream packets (12) already previously allocated to the respective data sink (20), and to determine the probability value based on whether the predetermined relationship between contents of the predetermined transport stream packets at the one or several potential locations and the capsulation data in the transport stream packets (12) already previously allocated to the respective data sink exists or not.

13. Apparatus according to one of the previous claims, wherein the apparatus is implemented to allocate transport stream packets (10), which are error-free according to the systematic forward error detection code, to the identified data sink based on an identification specification (54) of the respective error-free transport stream packet identifying the data sink (20) allocated to the same.

14. Apparatus according to one of the previous claims, wherein the apparatus is implemented to consider, when determining the probability value for each data sink (20), a short and/or long-term allocation frequency of past transport stream packets (12).

15. Apparatus according to one of the previous claims, wherein the apparatus is implemented to allocate the predetermined transport stream packet (12) based on the probability values for the plurality of data sinks (20) to the data sink with the highest probability value.

16. System for decoding a data stream addressed to a predetermined data sink, from a packet-based transport stream of transport stream packets respectively provided with a systematic forward error detection code, comprising
an apparatus according to one of the previous claims; and
a decoder for decoding the data stream embedded in the payload data portions of the transport stream packets allocated to the predetermined data sink by the apparatus.

17. Method for demultiplexing a packet-based transport stream (14) of transport stream packets (12) respectively provided with a systematic forward error detection code, wherein the transport stream packets each being allocated to one of a plurality of data sinks (20), such that a data stream (36) of forward error protection code protected data packets (38), which is addressed to the respective data sink (20), is embedded in a payload data portion of the transport stream packets allocated to the same data sink (20), the method comprising:
for a predetermined transport stream packet (12) that is erroneous according to the systematic forward error detection code, determining, for each of the plurality of data sinks, a probability value indicating how probably the predetermined transport stream packet (12) is allocated to the respective data sink (20), and
allocating the predetermined transport stream packet to a selected one of the plurality of data sinks based on the probability values for the plurality of data sinks.

18. Computer program having a program code for performing the method according to claim 17 when the program runs on a computer.

## Revendications

1. Dispositif de multiplexage d'un flux de transport à base de paquets (14) à partir de paquets de flux de transport (12) pourvus, chacun, d'un code d'identification d'erreur directe systématique, les paquets de flux de transport étant associés, chacun, à l'un parmi une pluralité de réservoirs de données (20), de sorte que dans un segment de données utiles des paquets de flux de transport associés à un même réservoir de données (20) soit incorporé un flux de données (36) composé de paquets de données protégés par un code de protection contre une erreur directe (38) adressé au réservoir de données (20) respectif, le dispositif étant réalisé pour
déterminer, pour un paquet de flux de transport prédéterminé (12) qui est affecté d'erreur selon le code d'identification d'erreur directe, pour chacun de la pluralité de réservoirs de données, une valeur de probabilité qui indique la probabilité selon laquelle le paquet de flux de transport prédéterminé (12) est associé au réservoir de données respectif (20), et
attribuer le paquet de flux de transport prédéterminé sur base de la valeur de probabilité pour la pluralité de réservoirs de données à l'un sélectionné parmi la pluralité de réservoirs de données.

2. Dispositif selon la revendication 1, dans lequel la détermination de la valeur de probabilité est réalisée, pour chaque réservoir de données, sur base d'informations du paquet de flux de transport prédéterminé qui sont spécifiques pour le réservoir de données, ou qui changent de manière spécifique pour les réservoirs de données d'un paquet de flux de transport attribué à un réservoir de données respectif à un autre paquet de flux de transport attribué à un réservoir de données respectif.

3. Dispositif selon la revendication 1 ou 2, dans lequel la détermination de la valeur de probabilité est, pour chaque réservoir de données, réalisée sur base d'une analyse d'un multiplexe temporel de paquets de flux de transport précédents.

4. Dispositif selon l'une des revendications 1 à 3, dans lequel la détermination de la valeur de probabilité est réalisée, pour chaque réservoir de données, sur base d'informations du segment de données utiles du paquet de flux de transport prédéterminé.

5. Dispositif selon l'une des revendications 1 à 4, dans lequel le flux de données adressé au réservoir de données respectif est incorporé, par fragmentation, pour chaque réservoir de données, dans les segments de données utiles (48) des paquets de flux de transport (12) associés au réservoir de données respectif, les paquets de flux de transport (12a) dans lesquels tombe un début (60) de l'un des paquets de données (38b) présentant, chacun, une information d'indicateur (56) qui indique l'endroit dans le segment de données utiles (48) du paquet de flux de transport respectif (12a) où tombe le début (60) du paquet de données respectif (38b), le dispositif étant réalisé pour
localiser, pour chaque réservoir de données (20), un premier segment (56) du paquet de flux de transport prédéterminé (12) de manière constante pour tous les réservoirs de données (20) ou pour le réservoir de données respectif (20) ou en fonction de paquets de flux de transport (12) déjà attribués auparavant au réservoir de données respectif (20),
localiser un deuxième segment (62) du paquet de flux de transport prédéterminé (12) en fonction d'un contenu du paquet de flux de transport prédéterminé (12a) au premier segment comme s'il s'agissait pour le contenu du paquet de flux de transport prédéterminé (12) dans le premier segment d'une information d'indicateur (56),
analyser le deuxième segment (62) pour s'avoir s'il peut s'agir du début d'un paquet de données (38) associé au réservoir de données respectif (20), et
déterminer, en fonction d'un résultat de l'analyse, la valeur de probabilité pour le réservoir de données respectif.

6. Dispositif selon la revendication 5, dans lequel le dispositif est réalisé pour vérifier, pour chaque réservoir de données dans l'analyse, s'il peut s'agir du début d'un paquet de données associé au réservoir de données respectif,
si un premier champ (110; 82, 98) dans le deuxième segment (62) coïncide avec des informations qui sont constantes pour le réservoir de données respectif (20) depuis au moins la dernière attribution d'un paquet de flux de transport (12) au réservoir de données respectif (20),
si un deuxième champ (116) dans le deuxième segment présente un rapport prédéterminé avec un troisième champ (118) dans le deuxième segment, comme cela vaut pour des données redondantes dans les données de capsulage et les données d'entête (74) des paquets de données (38) associés au réservoir de données respectif, et/ou
si un quatrième champ (112) dans le deuxième segment présente un rapport de code d'identification d'erreur directe systématique prédéterminé avec un cinquième champ (114) dans le deuxième segment.

7. Dispositif selon la revendication 5 ou 6, dans lequel les paquets de flux de transport (12b) dans lesquels ne tombe pas de début de l'un des paquets de données (38) associés au réservoir de données respectif (20) ne présentent pas d'information d'indicateur (56), de sorte que le segment de données utiles (48) des paquets de flux de transport (12b) dans lesquels ne tombe pas de début de l'un des paquets de données est agrandi, par rapport au segment de données utiles (48) des paquets de flux de transport (12a) dans lesquels tombe un début (60) de l'un des paquets de données, de l'absence de l'information d'indicateur, dans lequel le dispositif est réalisé pour
localiser, pour chaque réservoir de données auquel a été attribué en dernier lieu un paquet de flux de transport (12) dans lequel se trouvait un paquet de données (38) attribué au réservoir de données respectif (20) avec une indication de longueur (80) de laquelle ressort que ce même paquet de données s'étend au-delà du paquet de flux de transport attribué en dernier lieu au réservoir de données respectif (20), en fonction de l'indication de longueur (80) un troisième segment (120) au début du segment de données utiles (48) du paquet de flux de transport prédéterminé,
analyser le troisième segment (120) pour savoir s'il peut s'agir d'une continuation du même paquet de données, et
déterminer, en fonction d'un résultat d'analyse, la valeur de probabilité pour le réservoir de données respectif.

8. Dispositif selon l'une des revendications 1 à 7, dans lequel le dispositif est réalisé pour déterminer, pour chaque réservoir de données, la valeur de probabilité en fonction de
si un champ quelconque dans le paquet de flux de transport (12) prédéterminé coïncide avec les informations qui sont constantes pour le réservoir de données respectif (20) depuis au moins la dernière attribution d'un paquet de flux de transport au réservoir de données respectif,
si une première paire quelconque de champs dans le paquet de flux de transport prédéterminé qui présentent entre eux un premier rapport de position l'un par rapport à l'autre présentent entre eux un rapport de contenu prédéterminé, tel que cela est le cas pour des données redondantes dans les données de capsulage et les données d'en-tête des paquets de données associés au réservoir de données respectif, et/ou
si une première paire quelconque de champs dans le paquet de flux de transport prédéterminé présentant entre eux un deuxième rapport de position prédéterminé l'un par rapport à l'autre présentent entre eux un rapport de code d'identification d'erreur directe systématique prédéterminée.

9. Dispositif selon l'une des revendications 1 à 8, dans lequel les paquets de données (38) du flux de données (36) adressé à l'au moins un réservoir de données (20) sont incorporés, par fragmentation, pour chaque réservoir de données (20), dans le segment de données utiles (48) des paquets de flux de transport (12) associés au réservoir de données respectif (20), et chaque paquet de données (38) du flux de données (36) adressé au réservoir de données respectif (20) présente un champ de longueur (80) avec une indication de longueur qui indique une longueur du paquet de données respectif (38), et les paquets de flux de transport (12) présentent une information d'indicateur (56) qui indique l'endroit dans les segments de données utiles (48) des paquets de flux de transport (12) où se trouvent les débuts (60) des paquets de données (12), dans lequel le dispositif est réalisé pour
déterminer, pour chaque réservoir de données, la valeur de probabilité pour le réservoir de données respectif sur base d'une comparaison de l'indication de longueur d'un dernier paquet de données commencé dans l'un des paquets de flux de transport déjà attribués au réservoir de données respectif et de l'information d'indicateur du paquet de flux de transport prédéterminé.

10. Dispositif selon l'une des revendications précédentes, dans lequel, pour chaque réservoir de données (20), les paquets de données (38) du flux de données (36) associé au réservoir de données respectif (20) présentent, chacun, au moins une indication (82, 98) relative au réservoir de données, dans lequel le dispositif est réalisé pour
déterminer, pour chaque réservoir de données, un ou plusieurs endroits potentiels dans le paquet de flux de transport (12) auxquels pourrait se trouver une indication relative au réservoir de données, et
déterminer la valeur de probabilité pour le réservoir de données respectif par comparaison d'un contenu du paquet de flux de transport prédéterminé au ou aux endroits potentiels avec une valeur d'état relative au réservoir de données constante du réservoir de données respectif au moins depuis une dernière attribution d'un paquet de flux de transport au réservoir de données respectif.

11. Dispositif selon l'une des revendications 1 à 10, dans lequel le dispositif est réalisé pour
constater, pour chaque réservoir de données, parmi les paquets de flux de transport déjà attribués auparavant au réservoir de données respectif un contenu identique se répétant par intermittence, et
déterminer, pour chaque réservoir de données, la valeur de probabilité pour le réservoir de données respectif par comparaison d'un contenu du segment de données utiles (48) du paquet de flux de transport prédéterminé (12) avec le contenu identique se répétant par intermittence.

12. Dispositif selon l'une des revendications précédentes, dans lequel le flux de données (86) adressé au réservoir de données respectif (20) est, pour chaque réservoir de données, capsulé dans une structure de capsulage et fragmenté ensemble avec les données de capsulage (74) de la structure de capsulage dans les paquets de flux de transport (12) associés au réservoir de données respectif (20), dans lequel le dispositif est réalisé pour
déterminer, pour le réservoir de données respectif, plusieurs endroits potentiels (116, 118) dans le paquet de flux de transport (12) auxquels pourraient se trouver les contenus des données de capsulage et des paquets de données de flux de données adressé au réservoir de données respectif présentant entre eux un rapport prédéterminé, et déterminer la valeur de probabilité pour le réservoir de données respectif sur base de s'il existe ou non le rapport prédéterminé entre les contenus du paquet de flux de transport prédéterminé (12) aux plusieurs endroits potentiels déterminés (116, 118), ou
déterminer un ou plusieurs endroits potentiels dans le paquet de flux de transport prédéterminé (12) auxquels pourrait se trouver un contenu des paquets des données (38) du flux de données (36) adressé au réservoir de données respectif (20) présentant le rapport prédéterminé avec un contenu des données de capsulage dans l'un des paquets de flux de transport (12) déjà attribués auparavant au réservoir de données respectif (20), et déterminer la valeur de probabilité sur base de s'il existe ou non le rapport prédéterminé entre les contenus du paquet de flux de transport prédéterminé aux un ou plusieurs endroits potentiels et des données de capsulage dans les paquets de flux de transport (12) déjà attribués auparavant au réservoir de données respectif.

13. Dispositif selon l'une des revendications précédentes, dans lequel le dispositif est réalisé pour attribuer au réservoir de données identifié des paquets de flux de transport (10) qui sont exempts d'erreur selon le code d'identification d'erreur directe systématique sur base d'une indication d'identification (54) du paquet de flux de transport exempts d'erreur respectif qui identifie le réservoir de données (20) associé à ce dernier.

14. Dispositif selon l'une des revendications précédentes, dans lequel le dispositif est réalisé pour tenir compte, lors de la détermination de la valeur de probabilité pour chaque réservoir de données (20), d'une fréquence d'attribution de courte et/ou longue durée des paquets de flux de transport (12).

15. Dispositif selon l'une des revendications précédentes, dans lequel le dispositif est réalisé pour attribuer le paquet de flux de transport prédéterminé (12) sur base des valeurs de probabilité pour la pluralité de réservoir de données (20) au réservoir de données à la valeur de probabilité la plus haute.

16. Système de décodage d'un flux de données adressé à un réservoir prédéterminé à partir d'un flux de transport à base de paquets composé chaque fois de paquets de flux de transport pourvus d'un code d'identification d'erreur directe systématique, avec
un dispositif selon l'une des revendications précédentes; et
un décodeur destiné à décoder le flux de données qui est incorporé dans les segments de données utiles des paquets de flux de transport attribués par le dispositif au réservoir de données prédéterminé.

17. Procédé de multiplexage d'un flux de transport à base de paquets (14) composé chaque fois de paquets de flux de transport (12) pourvus d'un code d'identification d'erreur directe systématique, dans lequel les paquets de flux de transport sont associés, chacun, à l'un parmi une pluralité de réservoirs de données (12), de sorte que soit incorporé dans un segment de données utiles des paquets de flux de transport associés à un même réservoir de données (20) un flux de données (36), composé de paquets de données protégés par un code de protection d'erreur directe (38), adressé au réservoir de données respectif (20), le procédé comprenant ce qui suit:
déterminer, pour un paquet de flux de transport prédéterminé (12) qui est affecté d'erreur selon le code d'identification d'erreur directe systématique, une valeur de probabilité pour chacun de la pluralité de réservoirs de données qui indique la probabilité selon laquelle le paquet de flux de transport prédéterminé (12) est associé au réservoir de données respectif (20), et
attribuer le paquet de flux de transport prédéterminé à l'un sélectionné parmi la pluralité de réservoirs de données sur base des valeurs de probabilité pour la pluralité de réservoir de données.

18. Programme d'ordinateur avec un code de programme pour réaliser le procédé selon la revendication 17 lorsque le programme est exécuté sur un ordinateur.
